(19) Europäisches Patentamt
European Patent Office
Office européen des brevets

(11) Veröffentlichungsnummer: **0 645 615 A1**

(12) # EUROPÄISCHE PATENTANMELDUNG veröffentlicht nach Art. 158 Abs. 3 EPÜ

(21) Anmeldenummer: **93919731.5**

(51) Int. Cl.$^6$: **G01N 15/04**

(22) Anmeldetag: **05.08.93**

(86) Internationale Anmeldenummer: **PCT/RU93/00186**

(87) Internationale Veröffentlichungsnummer: **WO 94/03039 (17.02.94 94/05)**

(30) Priorität: **05.08.92 RU 5057709**

(43) Veröffentlichungstag der Anmeldung: **29.03.95 Patentblatt 95/13**

(84) Benannte Vertragsstaaten: **AT CH DE ES FR GB IT LI**

(71) Anmelder: **AKTSIONERNOE OBSCHESTVO "AGROKHIM-BIZNES"**
**Podsosensky per., 21-3**
**Moscow 103062 (RU)**
Anmelder: **ASTAKHOV, Alexandr Valentinovich**
**Pyatnitskaya ul., 76-48**
**Moscow 113095 (RU)**

(72) Erfinder: **ASTAKHOV, Alexandr Valentinovich**
**Pyatnitskaya ul., 76-48**
**Moscow, 113095 (RU)**
Erfinder: **BUNIN, Alexandr Viktorovich**
**Volzhsky bulvar, 42-24**
**Moscow, 109263 (RU)**
Erfinder: **KHAZOV, Stanislav Petrovich**
**ul. Fomichevoi, 14-1-49**
**Moscow, 123481 (RU)**

(74) Vertreter: **Sparing - Röhl - Henseler**
**Patentanwälte**
**Postfach 14 04 43**
**D-40074 Düsseldorf (DE)**

(54) **PHOTOELEKTRISCHE METHODE ZUR SEDIMENTATIONSANALYSE HOMOGENER DISPERSER SYSTEME.**

(57) Das fotoelektrische Verfahren zur Sedimentationsanalyse disperser Systeme einer homogenen stofflichen Zusammensetzung besteht darin, dass man ein Strahlenbündel einer beliebigen Form zunächst durch eine unbefüllte Küvette passieren lässt und den Anfangswert des dom durch die unbefüllte Küvette durchgegangenen ungestreuten Strahl erzeugten Fotostroms misst. Man bestimmt die Länge der Strecke h zwischen zwei am meisten voneinander entfernten Punkten der Projektionen zweier an den Wänden der unbefüllten Küvette gebildeter Lichtflecke auf eine parallel zur Sedimentationsrichtung verlaufende Ebene. Den Wert des relativen methodischen Fehlers vorgebend, bestimmt man die Grösse H. Man ordnet das Strahlenbündel so an, dass die Mitte der Strecke h sich in einer Tiefe H vom Suspensionsspiegel befindet.

Man befüllt die Küvette mit einer Suspension und misst die Zeitspanne $\tau$, während der die optische Dichte der Suspension dispergierter Pulverteilchen ab Zeitpunkt des Sedimentationsbeginns konstant bleibt, und misst die relative optische Dichte D(t) der Suspension.

Nach der Stokesschen Formel wird der Radius $r_{max}$ der grössten Pulverteilchen gefunden. Und an der Änderungsgeschwindigkeit der optischen Dichte $V_D$ bei $t>\tau$ bestimmt man die Verteilungsdichte $\nu(r)$ der Pulverteilchen als Funktion des Radius, die Verteilungsdichte $\mu(r)$ der Pulvermasse, den Mittelwert des Radius $\langle r \rangle$, den Mittelwert das Radiusquadrats $\langle r^2 \rangle$ und die Standardabweichung $\Delta$.

Zur Beschleunigung der Sedimentationsanalyse wird mit einem Strahlenbündel abgetastet, wofür man

EP 0 645 615 A1

ursprünglich das Strahlenbündel näher zum Küvettenboden um den Wert ΔH anordnet. Es kommen konvergente, divergente und parallele Strahlenbündel im Wellenlängenbereich vom 0,6 μm bis 0,05 μm zum Einsatz.

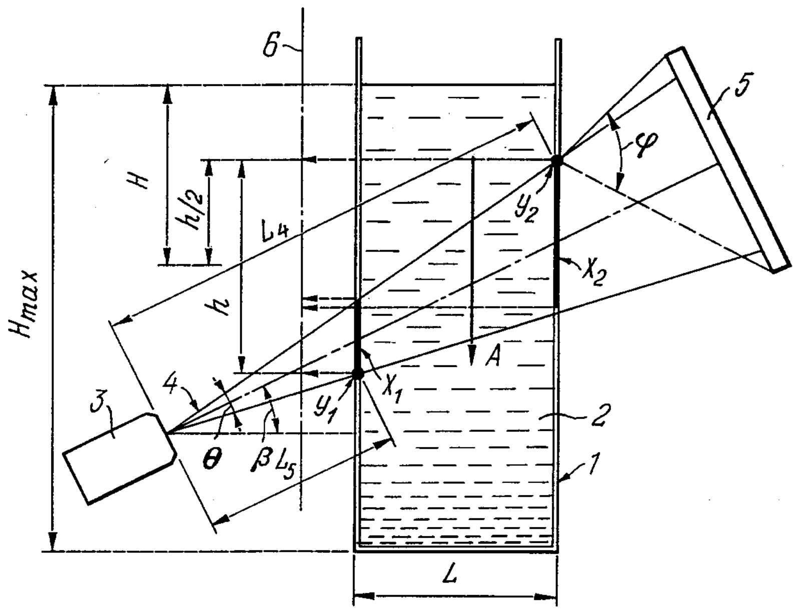


FIG.1

Gebiet der Technik

Die vorliehende Erfindung bezieht sich auf fotoelektrische Verfahren zur Sedimentationsanalyse des Dispersionsgrades von pulverförmigen Werkstoffen einer homogenen stofflichen Zusammensetzung. Das erfindungsgemässe Verfahren eignet sich zum Messen des Korngrössenaufbaus von Pulvern in der physikalischen Chemie, in der Masstechnik, Pharmakologie, Lebensmittelindustrie bei der Herstellung von Stärke, Mehl, Trockenmilch, Schokolade, Kaffee, Kakao, bei der Herstellung von Mineraldüngern und Pflanzenschutzmitteln, synthetischen Werkstoffen, Metallpulvern, Zement, Keramik, Quarz, Ton usw.

Bisheriger Stand der Technik

Es ist ein Verfahren zum Messen der Korngrössenverteilung eines Pulvers durch fotoelektrisches Abtasten und eine Einrichtung zur Durchführung desselben bekannt (siehe z.B. GB-PS Nr. 1069680 vom 21 August 1964), bei dem man die Korngrössenverteilung der Teilchen in der untersuchten Pulverprobe unmittelbar erhält. Die Durchführung des genannten Verfahrens erfolgt im Abtastmodus, bei dem man ein Lichtbündel in Wirkungsrichtung der Gravitationskraft bewegt. In einer homogenen Suspension kann die Korngrössenverteilung der Teilchen durch Messen der Teilchenabhängigkeit von der Tiefe ermittelt werden. Dabei wird angenommen, dass die querlaufende Dicke des Lichtbündels vernachlässigbar klein ist und das Absetzen der Teilchen im stationären Stokesschen Modus geschieht. Im Bereich dieser Annahmen ist im Verfahren ein Berechnungsalgotithmus begründet.

Das in Betracht stehende Verfahren benutzt ein schmales Lichtbündel, das eine vernachlässigbar kleine Dicke des Querschnitts aufweist. Jedoch ist das Kriterium für die Erfüllung dieser Bedingung quantitativ nicht bestimmt und deshalb ist eine genaue Einschätzung des Messfehlers, der sich aus dem Vorhandensein eines endlichen Querschnitts bei realen Lichtbündeln ergibt, nicht möglich.

Bei einem Betrieb mit kontinuierlicher Abtastung in Wirkungsrichtung der Gravitationskraft muss man mit Verlusten in der Aussage über die Anzahl der Teilchen hinreichend kleiner Grösse ($r_{min}$) rechnen, weil sie beim Absetzen hinter dem abtastenden Lichtbündel zurückbleiben. Ausserdem vergrössert sich die Messzeit beim Abtasten in dieser Richtung.

In dem in Betracht stehenden Verfahren wird der Zeitpunkt des Absetzungsbeginns für den Anfangszeitpunkt angenommen, nach dem über einen beliebigen Zeitraum die Bewegung der Lichtquelle von dem Suspensionsspiegel abwärts einsetzt. Da die Dauer der Pause nach dem Absetzungsbeginn nicht fixiert wird, wird jener Anteil des Pulvers, der durch die grössten Teilchen mit maximalem Radius vertreten ist, nicht vollständig erfasst.

Es ist auch ein fotoelektrisches Verfahren zur Sedimentationsanalyse disperser Systeme einer homogenen stofflichen Zusammensetzung bekannt, welches darin besteht, dass man Strahlenbündel durch eine unbefüllte Küvette passieren lässt und den Anfangswert des vom ungestreuten Strahlenbündel erzeugten Fotostromes misst. Daraufhin befüllt man die Küvette mit einer Suspension gleichmässig dispergierter Pulverteilchen. Während der Sedimentation misst man die Werte des Fotostroms, der von dem durch die Küvette durchgegangenen Anteil des Strahlenbündels erzeugt wird. Man misst die relative optische Dichte D(t) der Suspension dispergierter Pulverteilchen nach der Formel:

$$D(t) = \ln I_o/I_t$$

worin: $I_o$ die Fotostromstärke, die von dem durch die unbefüllte Küvette durchgegangenen Strahlenbündel erzeugt wird, $I_t$ die Fotostromstärke zum Laufzeitpunkt t bedeuten, und bestimmt nach der Stokesschen Formel $V = \alpha r^2$, worin V für die Absetzgeschwindigkeit der Teilchen steht, die Radienwerte r der Teilchen, die sich in der Suspension niederschlagen (siehe z.B. P.A.Kousow "Grundlagen für die disperse Analyse von Industriestäuben und zerkleinerten Werkstoffen", Leningrad, Chimia, 1971, S. 169-180).

Dabei ist die relative optische Dichte der Suspension zur gesamten Oberfläche $S_o^r$ der Teilchen der dispersen Phase proportional, deren Radien im Bereich vom Null bis r liegen

$$S_o^r = K \ln I_o/I_t$$

worin: K die Konstante ist, welche die optischen Eigenschaften des Messsystems charakterisiert, die vom Sedimentationsvorgang und von den Eigenschaften des Fotostromregisieriersystems nicht abhängen, über $S_o^r$ wird die Oberfläche $S_{r'}^r$ , sämtlicher Teilchen bestimmt, deren Radien sich im Bereich von r' bis r

befinden. Dann wird nach der Formel

$$Q^{r}_{r'} = \frac{10^{-4}}{3} \rho r_m \; K \; S^{r}_{r'} = \frac{10^{-4}}{3} \rho r_m \; K \; \ln I_{r'} / I_r$$

die Masse der Fraktionen ermittelt, deren Radien sich im Bereich von r' bis r befinden. Dabei sind $I_{r'}$ und $I_r$ registrierte Werte des Fotostroms zu jenen Zeitpunkten, die mit den Radien r' und r durch das Stokessche Gesetz verknüpft sind, $\rho$ ist die Dichte des Teilchenstoffes, $r_m$ ist der arithmetische Mittelwert von Radien r' und r, der Koeffizient K ist experimentell festgestellt.

Ausserdem wird in dem Verfahren vorgesehen, dass man auf die Messküvette senkrecht zu ihren Seitenwänden ein Bündel von parallelen Lichtstrahlen, die mittels eines speziellen "Kondensor-Blende"-Korrektursystems geformt worden sind, lenkt. Das von der Suspension gestreute Licht passiert eine zweite Blende und wird mittels eines zweiten Kondensors an der Fotozelle fokussiert, in elektrischen Strom umgewandelt, der am Gerät regisitriert wird. Dabei ändert sich die Durchgangstiefe des Lichtbündels bezüglich der Suspensions-oberflache nicht mit der Zeit.

Bei dem in Betracht stehenden Verfahren werden nur Integralcharakteristiken des Dispresionsgrades unmittelbar bestimmt. Man kann nicht ohne eine weitere Bearbeitung eine Information differentiellen Charakters erhalten. Diese beiden Prozeduren nehmen viel Zeit in Anspruch.

Es sind Formungssysteme für kollimierte Bündel von parallelen Lichtstrahlen im Einsatz, welche die technische Realisierung der Verfahrens erschweren. Das Streben nach der Schaffung sehr schmaler Bündel erhöht gleichzeitig den Einfluss von Schwankungen in der Suspension auf das Messergebnis, welche das Stokessche Modell des Gravitationsniederschlagens verzerren.

Es ist sehr problematisch, ob das in Betracht stehende Verfahren auf einen Teilchenbereich anzuwenden ist, bei dem sich ihre Abmessungen und Bewegungsart den Brownschen nähern, denn der Einfluss der Bewegung von Teilchen solcher auf den Messfehler kann quantitativ nicht eingeschätzt werden.

## Offenbarung der Erfindung

Der vorliegenden Erfindung liegt die Aufgabe zugrunde, ein fotoelektrisches Verfahren zur Sedimentationsanalyse disperser Systeme einer homogenen stofflichen Zusammensetzung zu schaffen, das es erlauben sollte, unter Berücksichtigung geometrischer Parameter des Strahlungsbündels die Anzahl der Teilchen jeder Fraktion eines dispersen Systems bei gekürzter Analysendauer zu ermitteln und dabei die metrologische Messgenauigkeit zu erhöhen.

Diese Aufgabe wird dadurch gelöst, dass man in einem fotoelektrischen Verfahren zur Sedimentationsanalyse disperser Systeme einer homogenen stofflichen Zusammensetzung, welches darin besteht, dass man einen Strahl durch eine unbefüllte Küvette passieren lässt und den Anfangswert des vom durch die unbefüllte Küvette durchgegangenen ungestreuten Strahl erzeugten Fotostroms misst, die Küvette mit einer Suspension gleichmässig in der Flüssigkeit dispergierter Pulverteilchen befüllt, die Werte des vom durch die Küvette durchgegangenen ungestreuten Strahlanteil erzeugten Fotostroms im Laufe der Sedimentation misst, die relative optische Dichte D(t) der Suspension dispergierter Pulverteilchen nach der Formel

$$D(t) = \ln I_o/I_t$$

worin $I_o$ die Fotostromstärke, die vom durch die unbefüllte Küvette durchgegangenen Strahl erzeugt wird, $I_t$ die Fotostromstärke, die vom durch die Küvette durchgegangenen ungestreuten Strahlanteil erzeugt wird, zum Laufzeitpunkt t bedeuten, misst und die Radienwerte r der sich in der Suspension absetzenden Teilchen nach der Stokesschen Formel

$$V = \alpha r^2$$

bestimmt, worin V die Absetzgeschwindigkeit der Teilchen bedeutet und $\alpha$ für einen Proportionalitätskoeffizienten steht, der sich aus der Formel

$$\alpha = \frac{2(\rho_m - \rho_g)\, g}{9\,\eta}$$

ergibt, worin $\rho_m$ = die Dichte der Pulverteilchen, $\rho_g$ = die Dichte der flüssigen Phase bei der Messungstemperatur, g = die Fallbeschleunigung, $\eta$ die dynamische Viskosität der flüssigen Phase bei der Messungstemperatur bedeuten, erfindungsgemäss das Strahlenbündel einer beliebigen Querschnittsform von einer Strahlungsquelle verwendet und für jede zum Einsatz kommende Form des Strahlenbündels die Länge h der Projektion der Strecke zwischen zwei voneinander am weitesten entfernten Punkten zweier an den Wänden der unbefüllten Küvette vom ungestreuten Strahlenbündel gebildeter Lichtflecke auf eine zur Sedimentationsrichtung parallel verlaufende Achse bestimmt, einen Wert des relativen methodischen Fahlers $\sigma$ nach der Formel

$\sigma = 0{,}5\,(h / 2H)^2$ ,

aus der die Grösse H nach der Formel

$H = 0{,}35\,(h/\sigma)^{1/2}$

zu bestimmen ist, im Bereich von 0,1% bis 0,00001% vorgibt, Strahlenbündel derart anordnet, dass die Mitte der Strecke h in einer Tiefe H vom Suspensionsspiegel zu liegen kommt, die Zeitspanne $\tau$, während der optische Dichte der Suspension dispergierter Pulverteilchen ab Zeitpunkt des Sedimentationsbeginns konstant bleibt, misst und die relative optische Dichte $D(\tau)$ der Suspension in dieser Zeitspanne $\tau$ nach der Formel

$D(\tau) = \ln I_o/I_t$

misst, nach der Stokesschen Formel unter Berücksichtigung dieser Zeitspanne den Radius $r_{max}$ der grössten Pulverteilchen nach der Formel

$r_{max} = \sqrt{\frac{H}{\alpha\tau}}$

ermittelt, die Änderungsgeschwindigkeit für die relative optische Dichte $V_D$ bei $t>\tau$ nach der Formel

$$V_D = \frac{dD(t)}{dt}$$

ermittelt und die Verteilungsdichte $\nu(r)$ der Pulverteilchen als Funktion des Radius nach der Formel

$$\nu(r) = -\frac{2}{r_{max}} \cdot \frac{t^{5/2}\, V_D(t)\big|_{t=H/\alpha r^2}}{\tau^{3/2} D(\tau) + \tau^{1/2} \int_{\tau}^{\infty} dt D(t)}$$

bestimmt.

Man kann bei der Durchführung der Sedimentationsanalyse vorteilhafterweise mit dem Strahlenbündel abtasten, wofür das Strahlenbündel derart angeordnet wird, dass die Mitte der Strecke h in einer Tiefe (H + ΔH) vom Suspensionsspiegel zu liegen kommt, wobei

$(H + \Delta H) < H_{max}$ ,

worin $H_{max}$ den Abstand zwischen Suspensionsspiegel und Küvettenboden bedeutet, das Strahlenbündel

nach Befüllen der Küvette mit einer Suspension gleichmässig in der Flüssigkeit dispergierter Pulverteilchen in der Sedimentationsrichtung entgegengesetzter Richtung mit einer gleichbleibenden Geschwindigkeit U, die sich aus der Formel

$$U<\alpha r^2_{max}\bullet\frac{\Delta H}{H}$$

ergibt, bewegt, die Zeitspanne $\tau_1$, während der die optische Dichte der Suspension dispergierter Pulverteilchen ab Zeitpunkt des Abtastungsbeginns konstant bleibt,misst, nach der Stokesschen Formel unter Berücksichtigung der Zeitspanne $\tau_1$ den Radius der grössten Pulverteilchen

$$r_{max} = \sqrt{\frac{H + \Delta H - U\tau_1}{\alpha\tau_1}}$$

ermittelt, die Abtastungszeit T $=\Delta H/U$ bestimmt und die Verteilungsdichte $\nu(r)$ der Pulverteilchen als Funktion des Radius nach der Formel

$$\nu(r) = -\frac{2}{r_{max}} \cdot \frac{A_1(t)\ t^{5/2} \cdot V_D(t)\Big|_{t=H(t)/\alpha r^2}}{\tau_1^{3/2}\ D(\tau_1) + \tau_1^{1/2}\int_{\tau_1}^{\infty} dt B_1(t) D(t)},$$

worin:

$$A_1(t) = \begin{cases} \dfrac{(H + \Delta H - U\tau_1)^{3/2}}{(H + \Delta H)(H + \Delta H - Ut)^{1/2}} & \text{bei } \tau_1 \leq t \leq T \\[2ex] \dfrac{(H + \Delta H - U\tau_1)^{3/2}}{(H + \Delta H - UT)^{3/2}} & \text{bei } t > T \end{cases}$$

$$B_1(t) = \begin{cases} \dfrac{(H + \Delta H)(H + \Delta H - U\tau_1)}{(H + \Delta H - Ut)^2} & \text{bei } \tau_1 \leq t \leq T \\[2ex] \dfrac{H + \Delta H - U\tau_1}{H + \Delta H - UT} & \text{bei } t > T \end{cases}$$

bestimmt und nach Erreichen der Tiefe H durch den Strahlenbündel mit der Abtastung aufhört.

Man kann zweckmässigerweise bei der Durchführung der Sedimentationsananlyse disperser Systeme mit einem Strahlenbündel abtasten, wofür das Strahlenbündel derart angeordnet wird, dass die Mitte der Strecke h in einer Tiefe (H + $\Delta$H) vom Suspensionsspiegel zu liegen kommt, wobei $(H + \Delta H)<H_{max}$, worin $H_{max}$ den Abstand zwischen Suspensionsspiegel und Küvettenboden bedeutet, nach Befüllen der Küvette mit einer Suspension gleichmässig in der Flüssigkeit dispergierter Pulverteilchen vor Abtastugsbeginn die Zeitspanne $\tau_2$, während der die optische Dichte der Suspension dispergierter Pulverteilchen ab Zeitpunkt des Sedimentationsbeginns konstant bleibt, misst, nach der Stokesschen Formel unter Berücksichtigung dieser Zeitspanne $\tau_2$ den Radius $r_{max}$ der grössten Pulverteilchen nach der Formel

$$r_{max} = \sqrt{\frac{H + \Delta H}{\alpha \tau_2}}$$

ermittelt, das Strahlenbündel ab Zeitpunkt $\tau_2$ in der Sedimentationsrichtung entgegengesetzter Richtung mit einer gleichbleibenden Geschwindigkeit U, die sich aus der Formel

$$U < \alpha r^2_{max} \cdot \frac{\Delta H}{H}$$

ergibt, bewegt, die Abtastungszeit $T = \frac{\Delta H}{U}$ ermittelt und die Verteilungsdichte $\nu(r)$ der Pulverteilchen als Funktion des Radius nach der Formel

$$\nu(r) = - \frac{2}{r_{max}} \cdot \frac{A_1(t)\ t^{5/2} v_D(t) \Big|_{t = H(t)/\alpha r^2}}{\tau_2 D(\tau_2) + \tau_2^{1/2} \int_{\tau_2}^{\infty} dt B_1(t) D(t)}$$

bestimmt, worin

$$A_1(t) = \begin{cases} \dfrac{(H + \Delta H - U\tau_2)^{3/2}}{(H + \Delta H)(H + \Delta H - Ut)^{1/2}} & \text{bei } \tau_2 \leq t \leq T \\ \dfrac{(H + \Delta H - U\tau_2)^{3/2}}{(H + \Delta H - UT)^{3/2}} & \text{bei } t > T \end{cases}$$

$$B_1(t) = \begin{cases} \dfrac{(H + \Delta H)(H + \Delta H - U\tau_2)}{(H + \Delta H - Ut)^2} & \text{bei } \tau_2 \leq t \leq T \\ \dfrac{(H + \Delta H - U\tau_2}{H + \Delta H - UT} & \text{bei } t > T \end{cases}$$

und nach Erreichen der Tiefe H durch das Strahlenbündel mit der Abtastung aufhört.

Die Erfindungsaufgabe wird auch dadurch gelöst, dass man in einem fotoelektrischen Verfahren zur Sedimentationsanalyse disperser Systeme einer homogenen stofflichen Zusammensetzung, welches darin besteht, dass man ein Strahlenbündel durch eine unbefüllte Küvette passieren lässt und den Anfangswert des vom durch die unbefüllte Küvette durchgegangenen ungestreuten Strahl erzeugten Fotostroms misst, die Küvette mit einer Suspension gleichmässig in der Flüssigkeit dispergierter Pulverteilchen befüllt, die Werte des vom durch die Küvette durchgegangenen ungestreuten Strahlanteil erzeugten Fotostroms misst, die relative optische Dichte D(t) der Suspension dispergierter Pulverteilchen nach der Formel

$$D(t) = \ln I_o/I_t$$

worin $I_o$ die Fotostromstärke, die vom durch die unbefüllte Küvette durchgegangenen ungestreuten Strahl erzeugt wird, $I_t$ die Fotostromstärke, die vom durch die Küvette durchgangenen ungestreuten Strahlanteil zum Laufzeitpunkt t erzeugt wird, bedeuten, misst und die Radienwerte r der sich in der Suspension absetzenden Teilchen nach der Stokesschen Formel

$V = \alpha r^2$

ermittelt, worin V die Absetzgeschwindigkeit der Teilchen ist und $\alpha$ für einen Proportionalitätskoeffizienten steht, der sich aus der Formel

$$\alpha = \frac{2(\rho_m - \rho_g) \cdot g}{9 \eta}$$

ergibt, worin $\rho_m$ die Dichte der Pulverteilchen, $\rho_g$ die Dichte der flüssigen Phase der Suspension, $\eta$ die dynamische Viskosität der flüssigen Phase bei der Messungstemperatur und g die Fallbeschleunigung bedeuten, erfindungsgemäss das Strahlenbündel einer beliebigen Querschnittsform verwendet und für jede zum Einsatz kommende Form des Strahlenbündels die Länge h der Projektion der Strecke zwischen zwei am weitesten voneinander entfernten Punkten der vom ungestreuten Strahlenbündel an den Wänden der unbefüllten Küvette gebildeten Lichtflecke auf eine parallel zur Sedimentationsrichtung verlaufende Achse bestimmt, einer Wert des methodischen Fehlers $\sigma$ nach der Formel

$\sigma = 0{,}5\ (h/2H)^2$

in der die Grösse H nach der Formel

$H = 0{,}35\ (h/\sigma)^{1/2}$

zu bestimmen ist, im Bereich von 0,1% bis 0,00001% vorgibt, das Strahlenbündel derart anordnet, dass die Mitte der Strecke h in einer Höhe H vom Suspensionsspiegel zu liegen kommt, die Zeitspanne $\tau$, während der die optische Dichte der Suspension dispergierter Pulverteilchen ab Zeitpunkt des Sedimentationsbeginns konstant bleibt, misst und die relative optische Dichte der Suspension $D(\tau)$ in dieser Zeitspanne $\tau$ nach der Formel

$D(\tau) = \ln I_o/I_t$

misst, nach der Stokesschen Formel unter Berücksichtigung dieser Zeitspanne den Radius $r_{max}$ der grössten Pulverteilchen nach der Formel

$r_{max} = \sqrt{\frac{H}{\alpha\tau}}$

ermittelt, die Änderungsgeschwindigkeit für die relative optische Dichte $V_D$ bei $t>\tau$ nach der Formel

$$V_D = \frac{dD(t)}{dt}$$

bestimmt und die Verteilungsdichte $\mu(r)$ der Pulvermasse nach Radienwerten der Pulverteilchen nach der Formel

$$\mu(r) = -\frac{2}{r_{max}} \cdot \frac{t \cdot V_D(t)\big|_{t=H/\alpha r^2}}{D(\tau) - 1/2 \cdot \tau^{1/2} \int_{\tau}^{\infty} \frac{dt}{t^{3/2}} D(t)}$$

bestimmt.

Es ist vorteilhaft, dass bei der Durchführung der Sedimentationsanalyse disperser Systeme mit einem Strahlenbündel abgetastetwird, wofür man das Strahlenbündel so anordnet, dass die Mitte der Strecke h in

einer Tiefe (H + ΔH) vom Suspensionsspiegel zu liegen kommt, wobei

$(H + \Delta H) < H_{max}$,

worin: $H_{max}$ den Abstand zwischen Suspensionsspiegel und Küvettenboden bedeutet,
das Strahlenbündel nach Befüllen der Küvette mit einer Suspension gleichmässig in der Flüssigkeit dispergierter Pulverteilchen in der der Sedimentationsrichtung entgegengesetzten Richtung mit einer gleichbleibenden Geschwindigkeit U, die sich aus der Formel

$U < \alpha r^2_{max} \cdot \frac{\Delta H}{H}$

bewegt, die Zeitspanne $\tau_1$, während der die optische Dichte der Suspension dispergierter Pulverteilchen ab Zeitpunkt des Abtastungsbeginns konstant bleibt, misst, nach der Stokesschen Formel unter Berücksichtigung dieser Zeitspanne $\tau_1$ den Radius der grössten Pulverteilchen

$$r_{max} = \sqrt{\frac{H + \Delta H - U\tau_1}{\alpha \tau_1}}$$

ermittelt, die Abtastzeit $T = \Delta H/U$ ermittelt und die Verteilungsdichte $\mu(r)$ der Pulvermasse als Funktion des Radius nach der Formel

$$\mu(r) = \frac{2}{r_{max}} \cdot \frac{A_2(t)\, t\, V_D(t) \Big|_{t = H(t)/\alpha r^2}}{D(\tau_1) + C(\tau_1, T)D(T) - 1/2\, \tau_1^{1/2} \int_{\tau_1}^{t} \frac{dt}{t^{3/2}} B_2(t) D(t)}$$

bestimmt, worin:

$$A_2(t) = \begin{cases} \frac{H + \Delta H - Ut}{H + \Delta H} & \text{bei } \tau_1 \leq t \leq T \\ 1 & \text{bei } t > T \end{cases}$$

$$C(\tau_1, T) = \left(\frac{\tau_1}{T}\right)^{1/2} \cdot \left[ \frac{(H+\Delta H-UT)^2}{(H+\Delta H-U\tau_1)^2} - \frac{(H+\Delta H-UT)^{1/2}}{(H+\Delta H-U\tau_1)^{1/2}} \right]$$

$$B_2(t) = \begin{cases} \frac{H + \Delta H}{(H+\Delta H-Ut)^{1/2}(H+\Delta H-U\tau_1)^{1/2}} & \text{bei } t \leq T \\ \frac{(H+\Delta H-UT)^{1/2}}{(H+\Delta H-U\tau_1)^{1/2}} & \text{bei } t \geq T \end{cases}$$

und nach Erreichen der Tiefe H durch das Strahlenbündel mit der Abtastung aufhört.

Von Vorteil ist, dass bei der Durchführung der Sedimentationsanalyse disperser Systeme mit einem Strahlenbündel abgetastet wird, wofür man das Strahlenbündel so anordnet, dass die Mitte der Strecke in einer Tiefe (H + ΔH) vom Suspensionsspiegel zu liegen kommt, wobei

$(H + \Delta H) < H_{max}$

worin $H_{max}$ den Abstand zwischen Suspensionsspiegel und Küvettenboden bedeutet, nach Befüllen der Küvette mit einer Suspension gleichmässig in der Flüssigkeit dispergierter Pulverteilchen vor Abtastungsbeginn die Zeitspanne $\tau_2$, während der die optische Dichte der Suspension dispergierter Pulverteilchen ab Zeitpunkt des Sedimentationsbeginns konstant bleibt, ermittelt, nach der Stokesschen Formel unter Berücksichtigung dieser Zeitspanne $\tau_2$, den Radius $r_{max}$ der grössten Pulverteilchen nach der Formel

$$r_{max} = \sqrt{\frac{H + \Delta H}{\alpha \tau_2}}$$

ermittelt, Strahlenbündel ab Zeitpunkt $\tau_2$ in der Sedimentationsrichtung entgegengesetzter Richtung mit einer gleichbleibenden Geschwindigkeit U, die sich aus der Formel

$U < \alpha r^2_{max} \frac{\Delta H}{H}$

ergibt, bewegt, die Abtastungszeit

$T = \frac{\Delta H}{U}$

ermittelt, und die Verteilungsdichte $\mu(r)$ der Pulvermasse nach Radienwerten der Pulverteilchen nach der Formel

$$\mu(r) = -\frac{2}{r_{max}} \cdot \frac{A_2(t) \cdot t\, V_D(t) \Big|_{t = H(t)/\alpha r^2}}{D(\tau_2) + C(\tau_2, T) D(T) - 1/2\, \tau_2^{1/2} \int_{\tau_2} \frac{dt}{t^{3/2}} B_2(t) D(t)}$$

bestimmt, worin:

$$A_2(t) = \begin{cases} \dfrac{H + \Delta H - Ut}{H + \Delta H} & \text{bei } \tau_2 \leq t \leq T \\ 1 & \text{bei } t > T \end{cases}$$

$$C(\tau_2, T) = \left(\frac{\tau_2}{T}\right)^{1/2} \left[ \frac{(H + \Delta H - UT)^2}{(H + \Delta H - U\tau_2)^2} - \frac{(H + \Delta H - UT)^{1/2}}{(H + \Delta H - U\tau_2)^{1/2}} \right]$$

$$B_2(t) = \begin{cases} \dfrac{H + \Delta H}{(H + \Delta H - Ut)^{1/2} (H + \Delta H - U\tau_2)^{1/2}} & \text{bei } t \leq T \\ \dfrac{(H + \Delta H - UT)^{1/2}}{(H + \Delta H - U\tau_2)^{1/2}} & \text{bei } t \geq T \end{cases}$$

und nach Erreichen der Tiefe H durch das Strahlenbündel mit der Abtastung aufhört.

Die Erfindungsaufgabe wird auch dadurch gelöst, dass man in einem fotoelektrischen Verfahren zur Sedimentationsanalyse disperser Systeme einer homogenen stofflichen Zusammensetzung, welches darin besteht, dass man ein Strahlenbündel durch eine unbefüllte Küvette passieren lässt und den Anfangswert des vom durch die unbefüllte Küvette durchgegangenen ungestreuten Strahl erzeugten Fotostroms misst, die Küvette mit einer Suspension gleichmässig in der Flüssigkeit dispergierter Pulverteilchen befüllt, die Werte des vom durch die Küvette durchgegangenen ungestreuten Strahlanteil erzeugten Fotostroms im Laufe der Sedimentation misst, die relative optische Dichte D(t) der Suspension dispergierter Pulverteilchen nach der Formel

$$D(t) = \ln I_o/I_t$$

worin $I_o$ die Fotostromstärke, die vom durch die unbefüllte Küvette durchgegangenen ungestreuten Strahl erzeugt wird, $I_t$ die Fotostromstärke, die vom durch die Küvette durchgegangenen ungestreuten Strahlanteil erzeugt wird, zum Laufeitpunkt t bedeuten, misst und nach der Stokesschen Formel

$$V = \alpha r^2$$

worin V die Absetzgeschwindigkeit der Tailchen bedeutet und $\alpha$ für eines Proportionalitätskoeffizienten steht, der sich aus der Formel

$$\alpha = \frac{2 \cdot (\rho_m - \rho_g) \cdot g}{9 \eta}$$

ergibt, in der $\rho_m$ die Dichte der Pulverteilchen, $\rho_g$ die Dichte der flüssigen Phase der Suspension, $\eta$ die dynamische Viskosität der flüssigen Phase bei der Messungstemperatur, g die Fallbeschleunigung bedeuten, die Radienwerte der sich absetzenden Teilchen bestimmt, erfindungsgemäss das Strahlenbündel einer beliebigen Querschnittsform von einer Strahlungsquelle verwendet und für jede zum Einsatz kommende Form des Strahlenbündels die Länge h der Projektion der Strecke zwischen zwei am weitesten voneinander entfernten Punkten zweier vom ungestreuten Strahlenbündel an den Wänden der unbefüllten Küvette gebildeter Lichtflecke auf eine parallel zur Sedimentationsrichtung verlaufende Achse ermittelt, einen Wert des methodischen Fehlers $\sigma$ nach der Formel

$$\sigma = 0{,}5\ (h/2H)^2,$$

in der die Grösse H nach der Formel

$$H = 0{,}35\ (h/\sigma)^{1/2}$$

zu bestimmen ist, im Bereich von 0,1% bis 0,00001% vorgibt, das Strahlenbündel derart anordnet, dass die Mitte der Strecke h in einer Tiefe H vom Suspensionsspiegel zu liegen kommt, die Zeitspanne $\tau$, während der die optische Dichte der Suspension dispergierter Pulverteilchen ab Zeitpunkt des Sedimentationsbeginns konstant bleibt, misst und die relative optische Dichte der Suspension $D(\tau)$ in dieser Zeitspanne nach der Formel

$$D(\tau) = \ln I_o/I_t$$

misst, nach der Stokesschen Formel unter Besichtigung dieser Zeitspanne $\tau$ den Radius der grössten Pulverteilchen nach der Formel

$$r_{max} = \sqrt{\frac{H}{\alpha \tau}}$$

ermittelt, die Änderungsgeschwindigkeit für die relative optische Dichte $V_D$ bei $t > \tau$ nach der Formel

$$V_D = \frac{dD(t)}{dt}$$

bestimmt und integrale Charakteristiken für den Dispersionsgrad der Pulverteilchen, und zwar

den Mittelwert des Radius ⟨r⟩ der Pulverteilchen nach der Formel

$$\langle r \rangle = r_{max} \frac{1 + \frac{1}{2\tau^{1/2} D(t)} \int_{\tau}^{\infty} \frac{dt}{t'^{1/2}} D(t)}{1 + \frac{1}{\tau D(\tau)} \int_{\tau}^{\infty} dt\, D(t)}$$

den Mittelwert des Radiusquadrats $\langle r^2 \rangle$ der Pulverteilchen nach der Formel

$$\langle r^2 \rangle = \frac{r_{max}^2}{1 + \frac{1}{\tau D(\tau)} \int_{\tau}^{\infty} dt\, D(t)}$$

und die Standardabweichung Δ zwischen dem Radius und dem Radiusquadrat nach der Formel

$$\Delta = \frac{(\langle r^2 \rangle - \langle r \rangle^2)^{1/2}}{\langle r \rangle}$$

bestimmt.

Es ist zweckmässig, dass bei der Durchführung der Sedimentationsanalyse desperser Systeme mit einem Strahlendbündel abgetastet wird, wofür man das Strahlenbündel derart anordnet, dass die Mitte der Strecke h in einer Tiefe (H + ΔH) vom Suspensionsspigel zu liegen kommt, wobei

$(H + \Delta H) < H_{max}$,

worin $H_{max}$ den Abstand zwischen Suspensionsspiegel und Küvettenboden bedeutet, nach Befüllen der Küvette mit einer Suspension gleichmässig in der Flüssigkeit dispergierter Pulverteilchen den Strahlenbündel in der Sedimentationsrichtung entgegengesetzter Richtung mit einer Geschwindigkeit U, die sich aus der Formel

$U < \alpha r^2_{max} \cdot \frac{\Delta H}{H}$

ergibt, bewegt, die Zeitspanne $\tau_1$, während der die optische Dichte der Suspension dispergierter Pulverteilchen ab Zeitpunkt der Abtastungsbeginns konstant bleibt, misst, nach der Stokesschen Formel unter Berücksichtigung der Zeitspanne $\tau_1$ den Radius der grössten Pulverteilchen

$$r_{max} = \sqrt{\frac{H + \Delta H - U\tau_1}{\alpha \tau_1}}$$

ermittelt, die Abtastungszeit $T = \Delta H/U$ bestimmt und die integralen Charakteristiken, und zwar:

den Mittelwert des Radius $\langle r \rangle$ der Pulverteilchen nach der Formel

$$\langle r \rangle = r_{max} \frac{1 + \frac{1}{2\tau_1^{1/2} D(\tau_1)} \int_{\tau_1}^{\infty} \frac{dt}{t^{1/2}} B_3(t) D(t)}{1 + \frac{1}{\tau_1 D(\tau_1)} \int_{\tau_1}^{\infty} dt\, B_1(t) D(t)}$$

worin $B_1$ oben definiert ist,

$$B_3(t) = \begin{cases} \frac{H + \Delta H}{H + \Delta H - Ut} & \text{bei } t \leq T \\ \frac{(H + \Delta H - U\tau_1)^{1/2}}{(H + \Delta H - UT)^{1/2}} & \text{bei } t \geq T \end{cases}$$

den Mittelwert des Radiusquadrats $\langle r^2 \rangle$ des Pulvers nach der Formel

$$\langle r^2 \rangle = \frac{r^2_{max}}{1 + \frac{1}{\tau_1 D(\tau_1)} \int_{\tau_1}^{\infty} dt B_1(t)\, D(t)}$$

und die Standardabweichung $\Delta$ zwischen dem Radius und dem Radiusquadrat

$$\Delta = \frac{(\langle r^2 \rangle - \langle r \rangle^2)^{1/2}}{\langle r \rangle}$$

bestimmt und

nach Erreichen der Tiefe H durch das Strahlenbündel mit der Abtastung aufhört.

Von Vorteil ist, dass bei der Durchführung der Sedimentationsanalyse disperser Systeme mit einem Strahlenbündel abgetastet wird, wofür man das Strahlenbündel so anordnet, dass die Mitte der Strecke in einer Tiefe $(H + \Delta H)$ vom Suspensionsspiegel zu liegen kommt, wobei

$(H + \Delta H) < H_{max}$,

worin $H_{max}$ den Abstand zwischen Suspensionsspiegel und Kübettenboden bedeutet,

nach Befüllen der Küvette mit einer Suspension gleichmässig in der Flüssigkeit dispergierter Pulverteilchen vor Abtastungsbeginn die Zeitspanne $\tau_2$, während der die optische Dichte der Suspension dispergierter Pulverteilchen ab Zeitpunkt des Sedimentationsbeginns konstant bleibt, misst, nach der Stokesschen Formel unter Berücksichtigung der Zeitspanne $\tau_2$ den Radius $r_{max}$ der grössten Pulverteilchen nach der Formel

$$r_{max} = \sqrt{\frac{H + \Delta H}{\alpha \tau_2}}$$

ermittelt, ab Zeitpunkt $\tau_2$ das Strahlenbündel in der Sedimentationsrichtung entgegengesetzter Richtung mit einer gleichbleibenden Geschwindigkeit U, die sich aus der Formel

$$U < \alpha r^2_{max} \frac{\Delta H}{H}$$

ergibt, bewegt, die Abtastungszeit $T = \frac{\Delta H}{U}$ bestimmt und integrale Charakteristiken für den Dispersionsgrad der Pulverteilchen, und zwar:

den Mittelwert des Radius $\langle r \rangle$ der Pulverteilchen nach der Formel

$$\langle r \rangle = r_{max} \frac{1 + \frac{1}{2 \tau_2^{1/2} D(\tau_2)} \int_{\tau_2}^{\infty} \frac{dt}{t^{1/2}} B_3(t) D(t)}{1 + \frac{1}{\tau_2 D(\tau_2)} \int_{\tau_2}^{\infty} dt \, B_1(t) \, D(t)}$$

worin $B_1$ oben definiert ist,

$$B_3(t) = \begin{cases} \frac{H + \Delta H}{H + \Delta H - Ut} & \text{bei } t \leq T \\ \frac{(H + \Delta H - U\tau_2)^{1/2}}{(H + \Delta H - UT)^{1/2}} & \text{bei } t \geq T \end{cases}$$

den Mittelwert des Radiusquadrats $\langle r^2 \rangle$ der Pulverteilchen nach der Formel

$$\langle r^2 \rangle = \frac{r^2_{max}}{1 + \frac{1}{\tau_2 D(\tau_2)} \int_{\tau_2}^{\infty} dt \, B_1(t) D(t)}$$

und die Standardabweichung $\Delta$ zwischen dem Radius und dem Radiusquadrat

$$\Delta = \frac{(\langle r^2 \rangle - \langle r \rangle^2)^{1/2}}{\langle r \rangle}$$

und nach Erreichen der Tiefe H durch das Strahlenbündel mit der Abtastung aufhört.

Es ist ebenso von Vorteil, dass man die Suspension gleichmässig in der Flüssigkeit dispergierter Pulverteilchen auf eine Temperatur T°K erhitzt, bei der die Brownsche Bewegung der kleinsten Pulverteilchen mit Radien in einem Bereich von 5 $\mu$m bis 0,01 $\mu$m zu vernachlässigen ist, und proportional zum Temperaturanstieg den Abstand H vom Suspensionsspiegel bis zur Mitte der Strecke h so vergrössert, dass die Bedingung

$$\frac{0{,}12 \cdot K}{\sigma(\rho_m - \rho_g)\, g \cdot \tau^3_{min}} \left(\frac{l}{H}\right) \leq 1$$

eingehalten bleibt.

Vorteilhafterweise kann ein Strahlenbündel zylindrischer Form mit einem Querschnittsradius R verwendet werden, dessen Achse senkrecht auf der Sedimentationsrichtung steht und in einer Höhe H liegt.

Vorteilhafterweise kann ein Strahlenbündel zylindrischer Form mit einem Querschnittsradius R verwendet werden, dessen Achse unter einem Einfallwinkel $\beta$ zur Sedimentationsrichtung liegt und sich aus der Bedingung

$$L\, tg\, \beta + \frac{2R}{\cos\beta} \leq 2{,}83\, H\sigma^{1/2}$$

worin L der Abstand zwischen den Küvettenwänden ist, ermitteln lässt.

Vorteilhafterweise kann ein konvergentes Strahlenbündel verwendet werden, dessen Achse auf der Sedimentationsrichtung senkrecht steht und dessen Konvergenzwinkel $\gamma$ sich aus der Bedingung

$$2\,(L + L_o)\, tg\, \frac{\gamma}{2} \leqq 2{,}83\, H\sigma^{1/2}$$

worin $L_o$ der Abstand von der Kegelspitze bis zur nächstliegenden Küvettenwand in der Normalen ist, ermitteln lässt.

Vorteilhafterweise kann ein konvergentes Strahlenbündel verwendet werden, dessen Achse unter einem Einfallwinkel $\beta$ zur Sedimentationsrichtung liegt und dessen Konvergenzwinkel $\gamma$ sich aus der Bedingung

$$L_1 \sin(\beta + \frac{\gamma}{2}) - L_2 \sin(\beta - \frac{\gamma}{2}) \leqq 2{,}83\, H\sigma^{1/2}$$

ermitteln lässt, worin $L_1$ den grössten Abstand von der Kegelspitze bis zum Schnittpunkt zwischen dem Strahlenbündel und der fernen Küvettenwand und $L_2$ den kürzesten Abstand von der Kegelspitze bis zum Schnittpunkt zwischen dem Strahlenbündel und der nahen Küvettenwand bedeuten.

Vorteilhafterweise kann ein divergentes Strahlenbündel verwendet werden, dessen Achse auf der Sedimentationsrichtung senkrecht steht und dessen Divergenzwinkel $\theta$ sich aus der Bedingung

$$2(L + L_3)\, tg\, \frac{\theta}{2} \leqq 2{,}83\, H\sigma^{1/2}$$

ermitteln lässt, worin $L_3$ der Abstand von der Strahlungsquelle bis zur nahen Küvettenwand in der Normalen ist.

Vorteilhafterweise kann ein divergentes Strahlenbündel verwendet werden, dessen Achse unter einem Einfallwinkel $\beta$ zur Sedimentationsrichtung liegt und dessen Divergenzwinkel $\theta$ sich aus der Bedingung

$$L_4 \sin(\beta + \frac{\theta}{2}) - L_5 \sin(\beta - \frac{\theta}{2}) \leqq 2{,}83 H\sigma^{1/2}$$

ermitteln lässt, worin $L_4$ den grössten Abstand von der Strahlungsquelle bis zum Schnittpunkt zwischen dem Strahlenbündel und der fernen Küvettenwand bedeutet und $L_5$ den kürzesten Abstand von der Strahlungsquelle bis zum Schnittpunkt zwischen dem Strahlenbündel und der nahen Küvettenwand bedeutet.

Vorteilhafterweise können auch Strahlenbündel eingesetzt werden, die sich im Wellenlängenbereich von 0,6 bis 0,05 $\mu$m befinden.

Ein grundsätzlicher Vorteil des erfindungsgemässen Verfahrens besteht in unmittelbarer Bestimmung differenzieller Teilchenverteilungen in der zu analysierenden Pulverprobe und deren Masse nach Teilchengrössen unter Ausschluss von zwei herkömmlichen Zwischenstufen, und zwar von unmittelbarer Bestimmung integraler Charakteristiken und von nachfolgender differenzieller Analyse. Die Messungszeit ist minimal, sie ist 2 bis 50 mal so klein wie die der bekannten Verfahren.

Das erfindungsgemässe Verfahren stellt keine strenge Forderungen an die Form des zu verwendenden Strahlenbündels, an die Querschnittsabmessungen sowie an den Gerichtetheitswinkel des Strahlenbündels

gegenüber der Sedimentationsrichtung. Diese Unterscheidungsmerkmale erlauben schon in einem Messzyklus eine wesentliche Herabsetzung des Einflusses von verschiedenen Schwankungen in der Suspension auf die Messgenauigkeit und eine Erweiterung des Bereiches der zu untersuchenden Teilchen durch eine räumliche Mittelung von Streueffekten, denn belichtet wird ein hinreichend grosses Suspensionsvolumen. Zur Durchführung des Verfahrens eignet sich eine einfache Vorrichtung, weil die Notwendigkeit, kollimierte Strahlenbündel vernachlässigbar kleiner Abmessungen im Querschnitt zur Verfügung zu haben und den Strahl bezüglich der Seitenwänden der Messküvette zusätzlich zu justieren, entfällt.

Das erfindungsgemässe Verfahren beruht auf dem Prinzip, das sich gänzlich von den bekannten dadurch unterscheidet, dass die Abhängigkeit der Analysendauer von der erforderlichen Messgenauigkeit durch eine entsprechende Auswahl einer optimalen Anordnungstiefe des Strahlenbündels gegenüber dem Suspensionsspiegel in der Messküvette zugrunde liegt. Somit erlangt man eine quantitative Einschätzung des Fehlers und der Messzeit.

Eines der grundsätzlichen Unterscheidungsmerkmale des erfindungsgemässen Verfahrens besteht in einer wesentlichen, um mehr als das Zweifache, Kürzung der Messzeit für Teilchen, die sich in Abmessungen und Bewegungsart den Brownschen nähern, d.h. Teilchen im Bereich von 5 bis 0,01 µm, durch die Erhöhung der Temperatur der Suspension unter Berücksichtigung der erforderlichen Messgenauigkeit.

## Kurze Beschreibung der Zeichnungen

Des weiteren wird die Erfindung an Hand konkreter Ausführungsformen mit Hinweisen auf die beiliegenden Zeichnungen näher erläutert. In den Zeichnungen zeigt:

Fig.1 in schematischer Darstellung eine Vorrichtung zur Durchführung des fotoelektrischen Verfahrens zur Sedimentationsanalyse disperser Systeme einer homogenen stofflichen Zusammensetzung gemäss der Erfindung;

Fig.2 in perspektivischer Gesamtansicht eine Küvette und zwei Lichtflecke, die vom Strahlenbündel an den Küvettenwänden gebildet sind, gemäss der Erfindung;

Fig.3 in schematischer Darstellung eine Küvette und ein Strahlenbündel zylindrischer Form, dessen Achse senkrecht auf der Sedimentationsrichtung steht, gemäss der Erfindung;

Fig.4 den Schnitt nach der Linie IV-IV der Fig.3 gemäss der Erfindung;

Fig.5 in schematischer Darstellung eine Küvette und ein Strahlenbündel, dessen Achse unter einem Einfallwinkel zur Sedimentationsrichtung liegt, gemäss der Erfindung;

Fig.6 den Schnitt nach der Linie VI-VI der Fig.5 gemäss der Erfindung;

Fig.7 in schematischer Darstellung eine Küvette und ein konvergentes Strahlenbündel, dessen Achse unter unter Einfallwinkel $\beta$ zur Sedimentationsrichtung steht, gemäss der Erfindung;

Fig.8 in schematischer Darstellung eine Küvette und ein divergentes Strahlenbündel, dessen Achse senkrecht auf der Sedimentationsrichtung steht, gemäss der Erfindung;

Fig.9 ein Diagramm der Änderung der Grösse p (r,t) für einen bestimmten Radius r der Teilchen im Zeitpunkt t gemäss der Erfindung.

## Ausführungsformen der Erfindung

Zur Durchführung des erfindungsgemässen Verfahrens zur Sedimentationsanalyse disperser Systeme einer homogenen stofflichen Zusammensetzung verwendet man eine Vorrichtung, die eine Küvette 1 (Fig.1) enthält, in der eine zu analysierende Syspension 2 unterzubringen ist.

Auf der einen Seite der Küvette 1 ist eine Strahlungsquelle 3 angeordnet, deren Strahlenbündel 4 auf die Küvette 1 gerichtet ist.

Auf der anderen Seite der Küvette 1 ist eine Photozelle 5 untergebracht, die dazu dient, die durch die Küvette 1 durchgegangenen Strahlen aufzufangen.

Das Strahlenbündel 4 (Fig.2) einer willkürlichen Form bildet im Durchgehen durch die unbefüllte Küvette 1 zwei Lichtflecke X1 und X2 an den Wänden der Küvette 1.

Wenn das Strahlenbündel eine willkürliche Form aufweist, so haben die Lichtflecke X1 und X2 an den Wänden der Küvette 1 auch eine willkürliche Form.

Für jede zum Einsatz kommende Form des Strahlenbündels bestimmt man die Länge h (Fig.1) der Projektion der Strecke zwischen zwei an weitesten voneinander entfernten Punkten $Y_1$ und $Y_2$ zweier vom ungestreuten Strahlenbündel 4 an den Wänden der unbefüllten Küvette 1 gebildeter Lichtflecke X1 und X2 auf eine Achse 6, die parallel zur durch den Pfeil A angedeuteten Sedimentationsrichtung verläuft.

Die Grösse H ist die Tiefe vom Suspensionsspiegel, in der sich die Mitte der Projektion der Strecke h befindet.

Gewöhnlich verwendet man zur Durchführung des erfindungsgemässen Verfahrens ein Strahlenbündel zylindrischer Form (Fig.3) mit dem Radius R des Querschnitts h = 2R (Fig.4), dessen Achse senkrecht auf der Sedimentationsrichtung steht und in einer Tiefe H vom Suspensionsspiegel liegt.

Es ist eine Ausführungsform möglich, bei der man ein Strahlenbündel zylindrischer Form mit dem Querschnittsradius R verwendet, dessen Achse unter einem Einfallwinkel $\beta$ (Fig.5) zur Sedimentationsrichtung liegt und sich aus der Bedingung

$$L\,tg\beta + \frac{2R}{\cos\beta} \leqslant 2{,}83\ H\sigma^{1/2}$$

ergibt, worin L der Abstand zwischen den Küvettenwänden ist.

Es ist auch eine Ausführungsform möglich, bei der man ein konvergentes Strahlenbündel 4 (Fig.2) verwendet, dessen Achse senkrecht auf der Sedimentationsrichtung steht und der Konvergenzwinkel $\gamma$ sich aus der Bedindung

$$2(L + L_o)tg\,\tfrac{\gamma}{2} \leqq 2{,}83\ H\sigma^{1/2}$$

ergibt, worin $L_o$ der Abstand von der Kegelspitze bis zur nächstliegenden Wand der Küvette 1 ist.

Man kann auch ein konvergentes Strahlenbündel 4 (Fig.7) verwenden, dessen Achse unter einem Einfallwinkel $\beta$ zur Sedimentationsrichtung liegt und der Konvergenzwinkel $\gamma$ sich aus der Bedingung

$$L_1\ \sin\left(\beta + \tfrac{\gamma}{2}\right) - L_2\ \sin\left(\beta - \tfrac{\gamma}{2}\right) \leqq 2{,}83\ H\sigma^{1/2}$$

ergibt, worin $L_1$ der grösste Abstand von der Kegelspitze bis zur Schnittpunkt zwischen dem Strahlenbündel und der f rnen Küvettenwand ist, $L_2$ der kürzeste Abstand von der Kegelspitze bis zum Schnittpunkt zwischen dem Strahlenbündel und der nahen Küvettenwand ist.

Es ist auch eine Ausführungsform möglich, bei der man ein divergentes Strahlenbündel 4 (Fig.8) verwendet, dessen Achse auf der Sedimentationsrichtung senkrecht steht und der Divergenzwinkel $\theta$ sich aus der Bedingung

$$2(L + L_3)\ tg\,\tfrac{\theta}{2} \leqq 2{,}83\ H\sigma^{1/2}$$

ergibt.

Die Achse des Strahlenbündels 4 kann unter einem Einfallwinkel $\beta$ (Fig.1) zur Sedimentationsrichtung liegen. Dabei ergibt sich der Divergenzwinkel $\theta$ aus der Bedingung

$$L_4\ \sin\left(\beta + \tfrac{\theta}{2}\right) - L_5\ \sin\left(\beta - \tfrac{\theta}{2}\right) \leqq 2{,}83\ H\sigma^{1/2}$$

Zur Durchführung des erfindungsgemässen Verfahrens werden Strahlen eingesetzt, die sich im Wellenlängenbereich von 0,6 $\mu$m bis 0,05 $\mu$m befinden.

Das fotoelektrische Verfahren zur Sedimentationsanalyse disperser Systeme einer homogenen stofflichen Zusammensetzung wird wie folgt durchgeführt.

Man stellt eine Suspension her aus einer Probe von Pulver homogener stofflicher Zusammensetzung, dessen Dispersionsgrad zu ermitteln ist, und einem Dispersionsmedium, wobei als letztere eine durchsichtige Flüssigkeit ausgewählt wird. Die Suspension wird in eine Messküvette 1 (Fig.1) mit durchsichtigen Wänden eingefüllt. Es wird angenommen, dass die Teilchen im Anfangszustand im ganzen Volumen der Suspension gleichmässig verteilt sind. In diesem Zustand ist die Konzentration der Suspension konstant. Es wird angenomen, dass die Teilchen sich mit der Stokesschen Geschwindigkeit niederschlagen. Für Teilchen des Radius r ergibt sich diese Geschwindigkeit aus der Bedingung

$$V = \alpha r^2 \qquad (1)$$

$$\alpha = \frac{2}{9}\,\frac{(\rho_m - \rho_g)\,g}{\eta} \qquad (2)$$

worin:

$\rho_m$ die Stoffdichte der Pulverteilchen, $\rho_g$ die Dichte der Dispersionsflüssigkeit, g die Fallbeschleunigung, $\eta$ die Viskosität der Flüssigkeit bedeuten.

Die sich absetzende Suspension wird als Streuer für das auf eine der Küvettenwände einfallende Strahlenbündel benutzt. Vorläufig misst man fotoelektrisch die Intensität der Strahlung, die durch die unbefüllte Küvette 1 (Fig.1) durchgegangen ist. Ferner ermittelt man auf dieselbe Weise nach dem Sedimentationsbeginn die Zeitabhängigkeit der Intensität der Strahlung des von der Suspension nicht gestreueten Strahlenbündels. Anhand dieser Angaben bestimmt man die Zeitabhängigkeit der optischen Dichte der sich absetzenden Suspension, die sich im einfallenden Strahlenbündel befindet.

Bei der optischen Dichte im Zeitpunkt t handelt es sich um die Grösse D(t).

$$D(t) = \ln I_o/I_t$$

worin: $I_o$ die gemessene Fotostromstärke, die von der durch die unbefüllte Küvette durchgegangenen Strahlung erzeugt ist, I(t) die Fotostromstärke, die von der durch die Suspension nicht gestreuten Strahlung zu einem beliebigen Zeitpunkt t>O nach dem Sedimentationsbeginn erzeugt wird. Die optische Dichte ändert sich mit der Zeit erst ab Zeitpunkt $t = \tau$. Binnen dieser Zeit werden die grössten Teilchen, die sich ursprünglich auf der Suspensionsoberfläche befanden, in der Küvette in den vom Strahlenbündel durchstrahlten Bereich eingetreten sein. Die Aufgabe besteht darin, anhand der aufgezählten Angaben samtliche Charakteristiken des Dispersität zu bestimmen, die durch die Geometrie der Wechselwirkung zwischen Strahlung und Suspension, die Brownsche Bewegung der Teilchen mitberechnet, bedingt ist.

Die erwähnten Charakteristiken sind die folgenden. Es handelt sich, erstens, um die Verteilungsdichte $\nu$-(r) der Teilchen in der Pulverprobe nach deren Stokesschen Radienwerten. Das Produkt $\nu$(r)dr ist dem Anteil der Teilchen gleich, deren Abmessungen in einen unendlich kleinen Abschnitt von r bis (r + dr) fallen. Darum gilt

$$\int_0^{r_{max}} \nu(r)\,dr = 1 \qquad (3)$$

In Ausdruck (3) bedeutet $r_{max}$ den Radius der grössten Pulverteilchen.

Zweitens, die Dispersität kennzeichnet sich durch die Verteilchgsdichte der Pulvermasse $\mu$(r) nach den Radienwerten der Pulverteilchen. Sie gestattet auch die Bestimmung des Massenanteils, die auf einen beliebigkleinen Abschnitt der Radienwerte entfällt. Die Grösse $\mu$(r) ist mit der Dichte $\nu$(r) durch die Beziehung

$$\mu(r) = \frac{r^3\,\nu(r)}{\int_0^{r_{max}} r^3\,\nu(r)\,dr} \qquad (4)$$

verknüpft und genügt der Bedingung, die der (3) ähnlich ist:

$$\int_0^{r_{max}} \mu(r)\,dr = 1 \qquad (5)$$

Die Verteilungsdichten $\nu$(r) und $\mu$(r) sorgen für eine höchst ausführliche und erschöpfende Charakteristik der Dispersität. Über diese Grössen kann man den Anteil der Teilchen ober der Pulvermasse auffinden, die auf einen beliebigen endlichen Interwale der Radienwerte $(r_1,r_2)$ von O bis $r_{max}$ entfallen. Diese Anteile lassen sich durch Integrale

$$\int_{r_1}^{r_2} \nu(r)\,dr \quad \text{und} \quad \int_{r_1}^{r_2} \mu(r)\,dr$$

bestimmen.

Ist die Masse M der entnommenen Pulverprobe bekannt, so sind die Grössen

$M\mu(r)dr$

und

$$M \cdot \int_{r_1}^{r_2} \mu(r)\,dr$$

den Massen gleich, die auf einen unendlich kleinen Intervall (r, r + dr) bzw. einen beliebigen endlichen Intervall ($r_1$,$r_2$) der Radienwerte der Teilchen entfallen.

Ausser den erwähnten integralen Verteilungen über die Dichte $\nu(r)$ sind zur Vollständigkeit der Analyse solche integrale Charakteristiken der Dispersitat notwendig wie

der Mittelwert des Radius der Teilchen $\langle r \rangle$

$$\langle r \rangle = \int_0^{r_{max}} r\,\nu(r)\,dr \qquad (6)$$

der Mittelwert des Radiusquadrats $\langle r^2 \rangle$:

$$\langle r^2 \rangle = \int_0^{r_{max}} r\,\nu(r)\,dr \qquad (7)$$

und die mittlere Standardweichung $\Delta$:

$\Delta = (\langle r^2 \rangle - \langle r \rangle^2)^{1/2}/\langle r \rangle$ (8)

Beim Einsatz eines Strahlenbündels mischt sich in der Regel der zu registrierenden Strahlung eine kleinwinklige gestreute Strahlung bei. Diese Beimischung ist vernachlässigbar klein, wenn $\phi/2\pi \ll 1$, worin $\phi$ für den grössten der Divergenzwinkel steht, unter dem die registrierende Fotozelle aus den Beleuchtungspunkten an den Seitenwänden der Messküvette sichtbar ist.(Fig.1).

Die Einhaltung dieser Bedingung ist leicht zu erzielen, wenn man nicht zu breite Stahlenbündel mit einer kleiner Winkeldivergenz verwendet. In diesem Fall genügt es, die registrierende Fotozelle in einem geringen Abstand zur Messküvette anzuordnen. Dieser Abstand muss viel grösser sein, als die Grösse der registrierenden Fotozelle ist. Wenn das Strahlenbündel z.B.parallel ist und seine Achse auf der Sedimentationsrichtung senkrecht steht, so genügt es, den Lichtempfäger mit einer Grösse von ca. 5 mm in einem Abstand ca.10 cm zur Messküvette anzuordnen.

Aus der bekannten Orientierung jedes Strahles im Strahlenbündel, die von einem Einheitsvektor $\vec{n}$ längs des Strahles angegeben wird, kann man immer die Orientierung des Strahlenbündels im ganzen bestimmen, indem man sie mit einem Mittelwert $\vec{\bar{n}}$ vorgibt. Möge die Bündelausbreitungslänge in dieser Richtung innerhalb der Küvette gleich L, d.h. dem Abstand zwischen den Küvettenwänden, sein. Dann gilt

$$\ln \frac{P(L,t)}{P_o} = -\pi n L \int_0^{r_{max}} dr r^2 \nu(r) p(r,t) \qquad (9)$$

worin P(L,t) die Leistung des ungestreuten Strahlungsanteils, die im Zeitpunkt t aus der Küvette austritt, $P_o$ die Strahlungsleistung, die durch die Küvette mit reiner Dispersionsflüssigkeit durchgegangen ist, n die Anzahl der Streuzentren in der Streuzentren in der Suspensionsvolumeneinheit im Zeitpunkt des Sedimentationsbeginns bedeuten.

Nach dem Sedimentationsbeginn bildet sich gemäss dem Stokesschen Gesetz ein Teilchenkonzentrationsgradient in der Suspension heraus. In jeder Schicht sind Teilchen von annähernd gleichem Radius anwesend.

Die Grösse p(r,t) stellt jenen Volumenenanteil der Küvette mit der Suspension nach der Entmischung der, der sich im Strahlenbereich zum Zeitpunkt t befindet und in einer Schicht liegt, die die Teilchen eines Radius $r_1$ enthält.

Da P(L,t) ≅ I(t) und $P_o = I_o$ ist, gilt für die optische Dichte der Suspension

$$D(t) = \pi n L \int_0^{r_{max}} dr \quad r^2 \nu(r) p(r,t) \qquad (10)$$

Die Beziehung (10) ist die Grundlage für die Erhaltung aller nachfolgender Ergebnisse. Diese können dank den folgenden Eingenschaften der Funktion p(r,t) erhalten werden. Man wählt eine Form des Strahlenbündels.

Für jede zum Einsatz kommende Form des Strahlenbündels bestimmt man die grösste Länge h der Projektion der Strecke zwischen zwei am meisten voneinander entfernten Punkten $y_1$ und $y_2$ zweier vom ungestreuten Strahlenbündel an den Wänden der unbefüllten Küvette gebildeter Lichtflecke $X_1$, $X_2$ auf eine der Sedimentationsrichtung A parallel verlaufende Achse 6.

Möge die Mitte dieser Projektion h im Anfangsmoment t = O sich in einer Tiefe H gegenüber dem Suspensionsspiegel befinden.

Nachstehend wird die allgemeine Herleitung der Hauptformeln gegeben, nach denen sich die erwähnten Parameter ermitteln lassen, welche die Dispersität des Pulvers kennzeichnen.

Anfangs sei der allgemeine Fall betrachtet, bei dem das Strahlenbündel sich bezüglich der Küvette mit Suspension fortschreitend mit einer gleichbleibenden Abtastungsgeschwingkeit U parallel zur Sedimentationsrichtung bewegt.

Betrachten wir zwei Zeitpunkte $t_{1,2}(r)$ (Fig.9), die sich aus der Gleichheit

$$H \pm \tfrac{h}{2} = (U + V)\, t_{1,2}(r) = (U + \alpha r^2) t_{1,2}(r) \qquad (11)$$

ergeben.

Im Zeitpunkt $t_1(r)$ beginnt das Ausscheiden der Teilchen des Radius r aus dem System der Streuzentren, welches zum Zeitpunkt $t_2(r)$ zu Ende geht. Folglich,

$$\frac{dp(r,t)}{dt} \neq 0$$

nur bei t aus dem Bereich $\{t_1(r), t_2(r)\}$.

Wenn die Seitenfläche des Strahlenbündels die Küvettenwände über die Linien einer von Null verschiedenen Krümmung in Punkten $y_1$ und $y_2$ (Fig.1) schneidet, dann ist die Grösse

$$\frac{dp(r,t)}{dt}$$

in den Stellen $t_{1,2}(r)$ stetig.

Aufgrund des Obengesagten kann die Grösse

$$\frac{dp(r,t)}{dt}$$

wie folgt dargestellt werden:

$$\frac{dp(r,t)}{dt} = \begin{cases} 0, \text{ bei } t < t_1(r), \; t > t_2(r) \\ -q(r,t) \dfrac{1}{t_2(r)-t_1(r)} \left[ \dfrac{\left( \left(\frac{h}{2}\right)^2 - \xi_r^2(t) \right)^{\frac{1}{2}}}{\frac{h}{2}} \right] \end{cases} \quad (12)$$

$\xi(t) = H(t) - \alpha r^2 t$, $H(t) = H - Ut$,

worin: $q(r,t)$ für eine langsamvariable Funktion steht, deren Funktionswerte in der Grössenordnung von 1 sind. In (12) sorgt die Grösse in eckigen Klammern für ein zügiges Nullwerden der Ableitung

$$\frac{dp(r,t)}{dt}$$

an den Stellen $t_{1,2}(r)$. Aus (11) und (12) erhält man

$$V_D(t) = \frac{\pi n L}{h} \int_{\sqrt{\frac{H(t)-h/2}{\alpha t}}}^{\sqrt{\frac{H(t)+h/2}{dt}}} dr \; q(r,t) r^2 (\alpha r^2 + U) \cdot \nu(r) \frac{\left[ (h/2)^2 - \xi_r^2(t) \right]^{1/2}}{h/2}$$

worin: $V_D(t) = \frac{dD}{dt}$ die Änderungsgeschwindigkeit der optischen Dichte im Zeitpunkt t bedeutet. Bei $H \gg h/2$ und dem Zeitpunkt t, für die $H(t) \gg h/2$ ebenso gilt, kann die Grösse $q(r,t)$ auf der rechten Seite der erhaltenen Gleichheit mit hoher Genauigkeit gleich eins gesetzt werden.

Man führe eine neue Integrationsvariable X ein durch die Beziehung:

$r = p(t)(1 + \gamma(t) \cdot x)^{1/2}$

worin: $p(t) = [H(t)/\alpha(t)]^{1/2}$ und $\gamma(t) = h/2H(t)$

Die Variable X verändert sich im Bereich von - 1 bis +1.

Das ergibt:

$$-\frac{2h}{K\pi n\, L\gamma(t)} \cdot \frac{1}{\alpha p^5(t)} \cdot V_D(t)$$

$$= \int_{-1}^{+1} dx(1+\gamma(t)\cdot x)^{1/2}\cdot(1+\gamma(t)x+ß)(1-x^2)^{1/2}\nu\, p(t)(1+\gamma(t)x)^{1/2})$$

worin $\beta = U/\alpha p^2(t)$.

Da angenommen wird, daß $\gamma(t) \ll 1$ ist, so ist das letzte Integral mit hoher Genauigkeit den ersten Gliedern seiner Taylorschen Entwicklung nach Potenzen $\gamma(t)$ gleich. Unter Beschränkung auf die Potenzen von nicht höher als die zweite nach Ausführung der notwendigen Integration erhält man:

$$-\frac{2h}{K\pi n\, L\gamma} \cdot \frac{1}{\alpha p^5} \cdot V_D(t)$$

$$= \frac{\pi}{2}(1+ß)\nu(p)\left\{1+\gamma^2\left[\frac{1}{8(1+ß)} - \frac{1}{32} + \frac{1}{16}\frac{\varrho d\nu}{\nu dp} + \frac{1}{8(1+ß)}\frac{pd\nu}{\nu dp} + \frac{1}{32}\frac{p^2}{\nu}\frac{d^2\nu}{dp^2}\right]\right\}$$

Hier ist zur Kürzung der Schreibweise das Argument t bei den Größen p, $\gamma$, $\beta$ weggelassen.

Brech-, Zerkleinerungs-, Dispergierungs- und sonstige Prozesse, die bei der Herstellung von Pulverstoffen verwendet werden, besitzen normalerweise keine differenzielle Selektivität. Das heißt, daß die Verteilungsdichten $\nu(p)$, mit denen man in der Praxis zu tun haben muß, keine Spitzen besitzen. In solchen Fällen gilt
$p/\nu\frac{d\nu}{dp} \cong 1$ und dementsprechend

$$p^2/\nu\,\frac{d^2\nu}{dp^2} << 1$$

Folglich kann die Größe in eckigen Klammern in der letzten Gleichung mit Recht wie folgt eingeschätzt werden: Nach der Größenordnung übersteigt sie nicht 0,28 $\gamma^2$.

Es wird angenommen, daß die Genauigkeitsreserve 0,5 $\gamma^2$ beträgt, was als methodische Genauigkeit angesehen werden kann. Dann gilt bei $\gamma \ll 1$

$$\nu(r) = -A^{-1}\left.\frac{H(t)\cdot V_D(t)}{r^3(\alpha r^2+U)}\right|_{t=\frac{H(t)}{\alpha r^2}} \qquad (13)$$

In (13) ist p durch r ersetzt und

$$A = \frac{k\pi^2 nL}{8} = const \qquad (14)$$

Diese Konstante ergibt sich aus der Bedingung (3). Gemäss (14) fixiert sie gleich das Produkt KnL.

Die Grundlage für die durchgeführte Analyse bildet die Abhängigkeit (9), worin angenommen wird, dass das im Strahlbereich befindliche Suspensionsvolumen in der Küvette nur von dem Teilchenradius abhängt und dass diese Abhängigkeit quadratisch ist.

Real existiert auch eine Abhängigkeit von der Form der Teilchen und deren Oberflächenzustand und von einer Reihe anderer Faktoren. Dies führt dazu, dass zwischen dem Suspensionsvolumen in der Strahlzone und der Grösse $\pi r^2$, streng gesagt, nur eine direkt proportionale Abhängigkeit besteht. Dabei unterscheidet sich der Proportionalitätskoeffizient von 1 um das 2-bis 10-fache. Dem ist in der Formel (14) durch die Grösse K Rechnung getragen. Die Formel (3) bestimmt den Einfluss sämtlicher oben aufgezählter Faktoren, indem sie diese mit der integralen Normierungscharakteristil der gesamten Analyse im ganzen verbindet.

Gehen wir zunächst auf den Fall ein, dass das Strahlenbündel stationär eingestellt ist unter der Bedingung,dass $h \ll H$.

In diesem Fall ist U = O und H(t) = H, so dass gemäss (13) mit einem methodischen Fehler $\sigma = 0{,}5(h/2H)^2$ gilt:

$$\nu(r) = -B^{-1} \left| V_D(t) / \alpha r^5 \right|_{t = H/\alpha r^2}$$

worin $B^{-1} = A^{-1}H$ und gemäss (3) sich aus der Gleichung

$$B = -\int_0^{r_{max}} dr \frac{V_D(t)}{\alpha r^5} \Bigg|_{t = \frac{H}{\alpha r^2}} \qquad (15)$$

ermitteln lässt.

In (15) führen wir anstatt der Integrationsvariable r eine neue Veränderliche $t = H/\alpha r^2$ ein. Die Zeit des Abnahmebeginns der optischen Dichte sei mit $\tau$ bezeichnet. Diese Zeit ist gleich:

$\tau = H/\alpha r^2_{max}$ (16)

Die partielle Integration der (15) ergibt:

$$B = (r_{max}/2) \left\{ \tau^{3/2} D(\tau) + \tau^{1/2} \int_\tau^\infty dt\, D(t) \right\}$$

Somit erhält man bei unbeweglichem Strahlenbündel:

$$\nu(r) = -\frac{2}{r_{max}} \frac{\left(t^{5/2} V_D(t)\right)\Big|_{t = H/\alpha r^2}}{\tau^{3/2} D(\tau) + \tau^{1/2} \int_\tau^\infty dt\, D(t)} \qquad (17)$$

Gemäss den Bestimmungen (4), (6) und (7) gilt nach notwendigen Umformungen

$$\mu(r) = -\frac{2}{r_{max}} \frac{t V_D(t) \Big|_{t = H/\alpha r^2}}{D(\tau) - \frac{\tau^{1/2}}{2} \int_\tau^\infty \frac{dt}{t^{3/2}} D(t)} \qquad (18)$$

$$\langle r \rangle = r_{max} \frac{1 + \left(\frac{1}{2\tau^{1/2} D(\tau)}\right) \int_\tau^\infty \frac{dt}{t^{3/2}} D(t)}{1 + \frac{1}{\tau D(\tau)} \int_\tau^\infty dt\, D(t)} \quad (19)$$

$$\langle r^2 \rangle = \frac{r_{max}^2}{1 + \frac{1}{\tau D(\tau)} \int_\tau^\infty dt\, D(t)} \quad (20)$$

Betrachten wir ein fotoelektrisches Verfahren, bei dem man bei der Durchführung der Sedimentationsanalyse disperser Systeme mit einem Strahlenbündel abtastet, d.h. das Strahlenbündel fortschreitend mit einer gleichbleibenden Abtastungsgeschwindigkeit U parallel zur Sedimentationsrichtung aufwärts bewegt wird.

Eine solche Arbeitsweise ist möglich, wenn der Strahler viel tiefer gegenüber dem Suspensionsspiegel angeordnet ist als der festgelegte methodische Fehler, der sich aus der Gleichung $H = 0{,}35\ (h/\sigma)^{1/2}$ ergibt.

Bezeichnen wird die Tiefe mit $(H + \Delta H)$, dann ist die Abtastungsgeschwindigkeit $U = \Delta H/T$, worin T für die Abtastungszeit steht.

Eine Beschleunigung der Analyse kann erzielt werden, wenn $T > \tau$ ist. Hier bedeutet $\tau$ die Zeit des Eintritts der grössten Teilchen in das sich bewegende Strahlenbündel. Das wird unter der Bedingung:

$H/\alpha r^2_{max} < \Delta H/U$, d.h.wenn $U < \alpha r^2_{max} (\Delta H/H)$ ist, (21)

stattfinden.

Die Grössenordnung des Radius $r_{max}$ und die Stokessche Geschwindigkeit der grössten Teilchen können z.B. mit Hilfe einer Grobsiebanalyse schnell genug abgeschätzt werden.

Um sich eine Vorstellung von möglichen Geschwindigkeitswerten U und der Abtastungszeit T zu bilden, betrachte man die oben angeführten Durchstrahlungsbedingungen, in denen bei $\sigma = 0{,}1\%$ die Grösse $H = 0{,}3$ cm ist. Möge $\Delta H = 1{,}8$ cm und $r_{max} \cong 10\ \mu m = 10^{-5}$ m sein. Bei $\alpha = = 3{,}27 \times 10^6$ 1/ms erhält man mit Hilfe von (21) $U < 2 \times 10^{-3}$ m/s = 2 mm/s und $T \geqq 10^2 s \cong 1{,}5$ min.

Die praktische Zweckmässigkeit der Einstellung der urspünglichen überschüssigen Durchstrahlungstiefe mit nachfolgendem Einsatz des Abtastungsbetriebes besteht darin, dass diese Prozeduren ein wirksames Mittel darstellen, den Einfluss auszuschliessen, den die in der Suspension bei deren Einfüllen in die Messküvette auftretenden Übergangsvorgänge auf die Analysenergebnisse ausüben.

Die Versteilungsdicht der Teilchen $\nu(r)$ im Abtastungsbetrieb wird durch den Ausdruck (13) bei $H(t) = H + \Delta H - Ut$ bei $t \leqq T$ sowie durch den Ausdruck (13), doch bei $H(t) = H =$ const bei $t \geqq T$ gegeben. Demgemäss wird in diesem Fall die Integration modifiziert, die in (13) die Konstante A bestimmt. Die Integration ergibt für $\nu(r)$ folgenden Ausdruck:

$$\nu(r) = \frac{2}{r_{max}} \frac{\left[A_1(t) \cdot t^{5/2} V_\vartheta(t)\right] \Big|_{t = \frac{H(t)}{\alpha r^2}}}{\tau^{-3/2} D(t) + \tau^{1/2} \int_\tau^\infty dt\, B_1(t) D(t)} \quad (22)$$

In (22) sind die Grössen $r_{max}$ und $\tau$ durch die Bezieung:

$$r_{max} = \sqrt{\frac{H + \Delta H - U\tau}{\alpha \tau}} \quad (23)$$

verknüpft

Die Funktionen $A_1(t)$ und $B_1(t)$ ergeben sich aus den Gleichungen:

$$A_1(t) = \begin{cases} \dfrac{(H+\Delta H-U\tau)^{3/2}}{(H+\Delta H)(H+\Delta H-Ut)^{1/2}} & \text{bei } \tau \leq t \leq T \\[2ex] \dfrac{(H+\Delta H-U\tau)^{3/2}}{(H+\Delta H-UT)^{3/2}} & \text{bei } t > T \end{cases} \qquad (24)$$

$$B_1(t) \begin{cases} \dfrac{(H+\Delta H)(H+\Delta H-U\tau)}{(H+\Delta H-U\tau)^2} & \text{bei } \tau \leq t \leq T \\[2ex] \dfrac{H+\Delta H-U\tau}{H+\Delta H-UT} & \text{bei } t > T \end{cases} \qquad (25)$$

Durch Ausführen entsprechender Umwandlungen erhält man folgenden Ausdruck für die Verteilungsdichte $\mu(r)$

$$\mu(r) = -\frac{2}{r_{max}} \frac{A_2(t) \cdot t\, V_D(t) \Big|_{t=\frac{H(t)}{\alpha r^2}}}{D(\tau) + C(\tau,T) \cdot D(T) - \frac{\tau^{1/2}}{2} \int_{\tau}^{\infty} \frac{dt}{t^{3/2}} B_2(t) D(t)} \qquad (26)$$

In (26) wird die Grösse H(t) ebenso wie bei der Bestimmung $\nu(r)$ ermittelt, und $r_{max}$ und $\tau$ sind durch die Gleichheit (23) verknüpft. Die Grössen $A_2(t)$, $C(\tau,T)$ und $B_2$ werden durch die Formeln vorgegeben:

$$A_2(t) = \begin{cases} \dfrac{(H+\Delta H-Ut)}{(H+\Delta H)} & \text{bei } \tau \leq t \leq T \\[2ex] 1 & \text{bei } t > T \end{cases} \qquad (27)$$

$$C(\tau,T) = \left(\frac{\tau}{T}\right)^{1/2} \left[ \frac{(H+\Delta H-UT)^2}{(H+\Delta H-U\tau)^2} - \frac{(H+\Delta H-UT)^{1/2}}{(H+\Delta H-U\tau)^{1/2}} \right] \qquad (28)$$

$$B_2(t) = \begin{cases} \dfrac{H+\Delta H}{(H+\Delta H-Ut)^{1/2}(H+\Delta H-U\tau)^{1/2}} & \text{bei } t \leq T \\[2ex] \dfrac{(H+\Delta H-UT)^{1/2}}{(H+\Delta H-U\tau)^{1/2}} & \text{bei } t > T \end{cases} \qquad (29)$$

Zum Schluss, ergeben sich für die Grössen $\langle r \rangle$, $\langle r^2 \rangle$ folgende Ausdrücke:

$$\tau = \tau_{max} \frac{1 + \frac{1}{2\tau^{1/2} D(\tau)} \int_\tau^\infty \frac{dt}{t^{1/2}} B_3(t) D(t)}{1 + \frac{1}{\tau D(\tau)} \int_\tau^\infty dt\, B_1(t) D(t)} \quad (30)$$

worin $B_1$ oben definiert ist,

$$B_3(t) = \begin{cases} \dfrac{H + \Delta H}{H + \Delta H - Ut} & \text{bei } t \leq T \\[2ex] \dfrac{(H + \Delta H - U\tau)^{1/2}}{(H + \Delta H - UT)^{1/2}} & \text{bei } t \geq T \end{cases} \quad (31)$$

Ferner,

$$\langle r^2 \rangle = \frac{r^2_{max}}{1 + \frac{1}{\tau D(\tau)} \int_\tau^\infty dt\, B_1(t) D(t)} \quad (32)$$

Aus dem Vergleich der Formeln für die Dispersitätscharakteristiken, die sich auf das unbewegliches Strahlenbündel und den Abtastungsbetrieb beziehen, sieht man ein, dass, wenn die Abtastungsgeschwindigkeit U gegen Null ($U \rightarrow O$) strebt, die Formeln 22, 26 in 17 bzw. 18 übergehen.

Es ist bekannt, dass bei Messungen des Gehalts der Teilchen kleiner Radien aus dem Bereich von 5 bis 0,01 µm unter natürlicher Sedimentation die Wirkung der Gravitationskräfte sich als sehr schwach erweist, während die Wirkung der Wärmebewegung wesentlich wird.

Schätzen wir bei vorgegebenem Fehler den Einfluss der Brownschen Bewegung auf die Analysenergebnisse ab. Ohne Mitrechnung dieser Bewegung bleibt die der freien Suspensionsfläche nächstliegende Grenze der räumlichen Verteilung der Teilchen eines beliebigen Radius bei dem Niederschlagen der Suspension flach. Die Brownsche Dewegung vermäscht diese Ebene zu einem Streifen, dessen Breite im Zeitpunkt t der Grössenordnung nach gleich $\ell_r = (D_r \cdot t)^{1/2}$ ist, worin der Diffusionskoeffizient $D_r$ der Teilchen des Radius r gleich

$D_r = kT/6\pi r\eta$ (33)

ist, worin k die Boltzmannsche Konstante und T die absolute Temperatur der Suspension bedeuten.

Der Verwaschungseffekt ist unwesentlich, wenn $l \ll h$ ist.

Wenn $r_{min}$ der Radius der kleinsten Pulverteilchen ist, so ist die Zeit für die Fotosedimentationsanalyse des Teilchendispersionsgrades gleich

$T_1 = H/\alpha r^2_{min}$ (34)

Somit gilt

$$(D_{r_{min}} \cdot T_1)^{1/2} \ll h.$$

Aus (2), (33) und dem Ausdruck für den methodischen Fehler $\sigma$ erhält man

$$\frac{0,12}{\sigma}\;\frac{K\,T}{(\rho_m - \rho_g)\,g\,r^3_{min}\,H} \ll 1 \qquad (35)$$

Wenn diese Grösse $\ll 1$ ist, so kann man die Brownsche Bewegung vernachlässigen.

Gesetzt den Fall, dass die Bedingung (35) eingehalten wird für eine Suspension mit Temperatur T, deren Wechselwirkung mit dem Strahlenbündel durch bestimmte Werte $\sigma$ und H und folglich h gekennzeichnet wird. Der methodische Fehler der Ergebnisse $\sigma = 0,5\,(h/2H)^2$ gestattet die Analyse, wie rationell die Bedingugen sind, unter denen das Verfahren durchgeführt wird.

Es liegt nahe, dass die Ungleichung (35) sich bei $\sigma$ = const. nicht ändert, wenn sowohl T als auch H gleichzeitig um ein Gleichfaches erhöht werden. Demgemäss gibt es die Möglichkeit, die Temperatur der Suspension zu erhöhen, was sich auf die Ergebnisse der Fotosedimentationsanalyse des Dispersionsgrades nicht auswirkt. Das ist wesentlich, weil die Viskosität der flüssigen Phase der Suspension $\eta$ nicht in (35) enthalten ist und bei dem Temperaturanstieg nach dem Exponentialgesetz $\eta \sim \exp W/kT$ sinkt, worin W die Aktivierungsenergie der zähen Strömung ist. Aus (2) und (34) folgt, dass $T_1$ identisch mit H $\eta$ ist. Deshalb kürzt sich die Analysenzeit bei gleicher Vergrösserung von H und T. Ausserdem kommt es bei der Temperaturerhöhung nicht zur Koagulation der Suspensionsteilchen.

Beispiel 1

Es sei ein Porzellanpulver mit $\rho_m = 2,5 \times 10^3$ kg/m$^3$ betrachtet. Möge $r_{min} = 0,1\ \mu m = 10^{-7}$ m sein, das Pulver sei dispergiert in Wasser min $\rho_g = 10^3$ kg/m$^3$ bei Raumtemperatur T = 293°K.

Die erhaltene Suspension steht mit dem Strahlenbündel in Wechselwirkung unter folgenden Bedingungen: H = 0,3 cm = $0,3 \times 10^{-2}$ m, h = 0,03 cm = $0,3 \cdot 10^{-3}$ m. Dann ist $\sigma = 0,5\,(h/2H)^2 = 0,001$ oder 0,1%. Durch Einsetzung der oben aufgeführten Angaben und $K = 1,38 \times 10^{-23}$ in die linke Seite (35) ermittelt man ihren numerischen Wert

$$\frac{0,12 \cdot 1,38 \cdot 10^{-23}\ J/K \cdot 293^{0}K}{10^{-3} \cdot 1,5 \cdot 10^{3} \cdot kg/m^{3} \cdot 9,8\ m/s^{2} \cdot 10^{-21} m^{3} \cdot 0,3 \cdot 10^{-2}\ m} = 0,1$$

Somit wird die Bedingung (35) erfüllt, wenn die Temperatur ungefähr um ein 1,136-faches auf 333°K (60°C) und um soviel H auf 0,34 cm und h auf 0,034 cm erhöht werden. Wenn man berücksichtigt, dass die Wasserviskosität bei der Temperatur von 333°K (60°C) um das 2,19 fache kleiner als die Viskosität bei Raumtemperatur ist, so verkürzt sich die Analysenzeit gemäss (2) und (34) nach Erwärmen der Suspension auf 60°C fast um das Zweifache. Die Wasserviskosität bei Raumtemperatur beträgt $\eta = 10^{-3}$ kg/m.s. Bei diesem Wert $\eta$ ist der Koeffizient $\alpha$ aus (2) gleich $\alpha = 3,27 \cdot 10^6\ m^{-1}\ s^{-1}$. Aus der Gleichung (34) ergibt sich die volle Analysenzeit bei Raumtemperatur $T_1$ zu $0,91 \cdot 10^5$ s und beträgt 25 Stunden. Bei der Temperatur 333°K (60°C) liegt sie bei ca. 12,5 Stunden.

Die Wirksamkeit der festgestellten Abhängigkeit des methodischen Fehlers $\sigma$ von der Grösse h und H sei vorgeführt am Beispiel eines Röntgenstrahlenbündels, dessen Querschnittsradius $R = 2h \cong 2,5 \cdot 10^{-3}$ cm ist. Die Tiefe des Durchgangs des Bündels durch die Suspension liegt bei etwa 10 cm. Theoretisch kann man mit einem solchen Bündel die Analyse mit einem methodischen Fehler $\sigma$ = 0,5% durchführen, indem man die Suspension nur in eine Tiefe von $H = 10\ R = 2,5 \cdot 10^{-2}$ cm durchleuchtet. Doch ist die Wahl einer solchen Tiefe nicht zweckmässig wegen schnellen Austritts grosser Teilchen aus dem System und des augenfälligen Einflusses, den die Störungen in der Suspension, welche durch Einfüllen der Suspension in die Messküvette verursacht werden, auf diese Sedimentationsstufe ausüben. Setzt man H = 0,5 cm, was 20 mal so gross wie die oben erwähnte Tiefe 10 cm und auf das 20 fache die Messzeit verkürzt (beispielsweise von 18 Stunden auf 0,9 Stunden für eine Probe mit einer Dichte von $\rho$ = 3,17, die sich im Wasser bei 32°C befindet), so lassen sich sämtliche Characteristiken der Dispersität mit einem methodischen Fehler

$$\sigma = 0{,}5 \cdot \left(\frac{2{,}5\cdot 10^{-3}}{0{,}25}\right)^2 = 1{,}25\cdot 10^{-5} \; (\cong 0{,}001\%)$$

ermitteln.

Zählen wir alle Möglichkeiten zur Zeitkürzung bei der Fotosedimentationsanalyse, die von der angemeldeten Erfindung herrühren, auf.

Im eingespielten Betrieb wird dies durch die Wahl der Durchleuchtungstiefe H erreicht, die in dem Sinne minimal ist, dass bei der vorgegebenen Form des Strahlenbündels die erwünschte methodische Messgenauigkeit gewährleistet wird. Im Abtastungsbetrieb kürzt sich ebenso die Analysenzeit erheblich beim Einsatz von dünnen Strahlenbündeln und bei der Messung hochdisperser Teilchen. Man kann die Temperatur der Suspension unter Einhaltung der Bedingung (35) erhöhen. Die letztere Möglichkeit besteht darin, dass nicht die Charakteristiken der differenziellen Dispersität selbst gemessen werden, sondern die Verhältnisse ihrer verschiedenen Werte, die abschätzen lassen, um wieviel Male mehr oder weniger es die Teilchen eines Radius oder die darauf entfallende Masse gibt als Teilchen eines anderen Radius bzw.Masse. Diese Verhältnisse, die beispielsweise im stationären Betrieb durch die Formeln

$$\frac{\nu(r_1)}{\nu(r_2)} = \frac{t^{5/2}\, V_D(t) \,\Big/\, t = \frac{H}{\alpha r_1^2}}{t^{5/2}\, V_D(t) \,\Big/\, t = \frac{H}{\alpha r_2^2}}$$

$$\frac{\mu(r_1)}{\mu(r_2)} = \frac{tV_D(t) \,\Big/\, t = \frac{H}{\alpha r_1^2}}{tV_D(t) \,\Big/\, t = \frac{H}{\alpha r_2^2}}$$

gegeben werden, enthalten keine Werte der optischen Dichte zu allen Messzeitpunkten.

Beispiel 2

Nachstehend ist ein Beipiel für die Durchführung des erfindungsgemässen Verfahrens zur Sedimentationsanalyse des Dispersionsgrades von Quarzsand "Centriforce abrasive" hoher Reinigungsstufe (Fig.3,4) angeführt.

In den Mikroprozessor werden eingegeben:

- der Wert der Dichte $\beta_m$ = 2,65$\cdot 10^{-3}$kg/m$^3$;
- den methodischen Analysenfehler $\sigma$, beispielsweise höchstens 0,15%im gesamten Massbereich der Teilchen;
- Messtemperatur T = 20°C;
- man verwendet ein Strahlenbündel zylindrischer Form von einer Helium-Neon-Laserquelle mit dem Radium R = 6,5$\cdot 10^{-4}$ m, dessen Achse auf der Sedimentationsrichtung senkrecht steht, wobei die Tiefe H, in der die Bündelachse gegenüber dem Suspensionsspiegel liegt, zu H = 1,22$\cdot 10^{-2}$ m eingestellt wird; der Wert H wird in den Mikroprozessor eingegeben; in die Rechenanlage wird auch die Grösse h = 2R = 13$\cdot 10^{-4}$ m eingegeben;
- als Dispersionsflüssigkeit wird destilliertes Wasser verwendet, was den Stokesschen Beiwert $\alpha$ z.B. zu $\alpha$ = 35$\cdot 10^5$ m$^{-1}\cdot$s$^{-1}$ ergibt.

Man lässt das Strahlenbündel durch eine unbefüllte Küvette passieren und bestimmt den Anfangswert des Fotostroms $J_o$, beispielsweise zu $I_o$ = 207 mA. Die Durchleuchtung der Suspension in dem in Betracht stehenden Beispiel erfolgt ohne Abtasten in einer unveränderlichen Tiefe H.

In die Messküvette füllt man mit Hilfe eines Dosierers, beispielsweise einer Spritze, ein erforderliches Volumen der Suspension ein, das durch Vermischen von Quarzsand mit Wasser zubereitet wurde. Daraufhin schaltet der Mikroprozessor den Laufzeitgeber und das Rechenprogramm ein. Die Zeitspanne

wird gemessen, während der die optische Dichte ab Zeitpunkt des Sedimentationsbeginns konstant bleibt. In dem in Betracht stehenden Beispiel beträgt $\tau$ = 3 s. Nach der Stokesschen Formel wird unter Mitrechung dieser Zeitspanne $\tau$ der Radius der grössten Pulverteilchen $r_{max} = \sqrt{\frac{H}{\alpha\tau}}$ ermittelt, beispielsweise bei $\tau$ = 3 s ist $r_{max}$ = 34 $\mu$m.

Im Laufe der Sedimentation werden in bestimmten Zeitabständen, beispielsweise 0,1; 1; 10; 30 s

der Fotostrom I(t), der vom durch die Küvette durchgegangenen ungestreuten Anteil des Strahlenbündels (siehe unten die Tabelle) erzeugt wird,

- die Radienwerte der sich in der Suspension absetzenden Teilchen $r(t) = \sqrt{\frac{H}{\alpha t}}$

gemessen.

Es werden betreffende Werte der relativen optischen Dichte $D(t) = \ln I_o/I_t$ und deren Änderungsgeschwindigkeit

$$V_D(t) = \frac{dD(t)}{dt} \quad \nu$$

bei t>$\tau$ ermittelt.

Nach festgestellten Werten dieser Grössen bestimmt man die Verteilungsdichte $\nu$(r) der Pulverteilchen und die Dichte $\mu$(r) der Verteilung der Pulvermasse nach Teilchenradienwerten nach den Formeln 17, 18. Darüber hinaus findet man, ohne diese Verteilungsfunktionen direkt zu bestimmen, die ihnen entsprechenden integralen Characteristiken der Dispersität der Pulverteilchen:

- den Mittelwert des Radius $\langle r \rangle$ der dispergierten Teilchen, den Mittelwert des Radiusquadrats $\langle r2 \rangle$ und die Standardabweichung $\Delta$ nach den Formeln 19, 20:

  In diesem Beispiel sind die Werte t, I, r auswahlweise in der Tabelle zusammengestellt, nach der die errechneten Werte $\langle r \rangle$, $\langle r2 \rangle$, $\Delta$, $\bar{r} = \sqrt{\langle r^2 \rangle}$ aufgeführt sind.

Tabelle

| t, sek | I, mA | r $\mu$m |
|---|---|---|
| 3 | 104,0 | 34,0 |
| 50 | 107,0 | 8,35 |
| 100 | 111,0 | 5,90 |
| 150 | 122,0 | 4,82 |
| 200 | 135,0 | 4,17 |
| 25β | 145,0 | 3,73 |
| 300 | 153,0 | 3,40 |
| 350 | 162,0 | 3,15 |
| 400 | 175,0 | 2,95 |
| 450 | 179,0 | 2,78 |
| 500 | 183,0 | 2,64 |
| 550 | 187,0 | 2,51 |
| 600 | 188,0 | 2,41 |
| 650 | 190,0 | 2,31 |
| 700 | 193,0 | 2,23 |
| 750 | 194,0 | 2,15 |
| 800 | 197,0 | 2,08 |
| $\langle r \rangle$ = 3,39 $\mu$m, $\langle r^2 \rangle$ = 11,93 $\mu m^2$, $\bar{r}$ = 3,45 $\mu$m, $\Delta$ = 0,2 | | |

Die Messzeit, einschliesslich auch der Analysenzeit im stationären Betrieb mit einem vorgegebenen Wert des relativen methodischen Fehlers für betreffendes Pulver, betrug ungefähr 20 Minuten.

Beispiel 3

Bei der Durchführung der Messungen im Abtastungsbetrieb führt man die Operationen aus, wie sie im Beispiel 2 für den stationären Betrieb angegeben sind.

Dabei:

- wird das Strahlenbündel so eingestellt, dass die Mitte der Strecke h in einer Tiefe (H + ΔH) vom Suspensionsspiegel zu liegen kommt, worin H an dem Wert des vorzugebenden methodischen Fehlers $\sigma$ bestimmt wird; $H = 0{,}35(h/\sigma)^{1/2}$, und die Tiefe (H + ΔH) muss kleiner sein als der Abstand zwischen Suspensionsspiegel und Küvettenboden, z.B. ΔH = 1 cm.
- wird die Abtastungsgeschwindigkeit unter Einhaltung der Bedingung $U < \alpha r^2_{max} \bullet \frac{\Delta H}{H}$ , $U \leqq 3{,}3 \bullet 10^{-1}$cm/s, berechnet, worin $r_{max}$ beispielsweise im stationaren Betrieb bestimmt wird;
- wird die Abtastungszeit $T_1 = \frac{\Delta H}{U} = 3$ s bestimmt, die Berechnungsbeispiele für ΔH, U,T sind auf Seite 42 aufgeführt;
- werden die Strahlungsquelle 3 und der Lichtempfänger 5 nach Befüllen der Küvette mit Suspension in der Sedimentationsrichtung entgegengesetzter Richtung mit einer gleichbleibenden Geschwindigkeit $U \leqq 3{,}3\ 10^{-1}$cm/s bewegt;
- wird die Zeitspanne $\tau$ gemessen, während der die optische Dichte D(t) der Suspension ab Zeitpunkt des Abtastungsbeginns konstant bleibt.

Die nachfolgenden Operationen sind denen des stationären Betriebs ähnlich und die Errechnung $\gamma(r)$, $\mu(r)$ und der integralen Charakteristiken der Dispersionsgrades der Pulverteilchen erfolgt nach entsprechenden Formeln 22, 26 und 30, 32 für den Abtastungsbetrieb. Dabei werden einige Zeitfunktionen $A_1(t)$, $B_1(t)$, $C(\tau_1,T)$,$A_2(t)$, $B_2(t)$ und $B_3(t)$ unter Ausnutzung der oben genannten Ausdrücke mit $H(t) = H + \Delta H - Ut$ bei $\tau \leqq t \leqq T$ berechnet.

Die Messzeit, einschliesslich auch der Analysenzeit im Abtastungsbetrieb mit vorgegebenem methodischen Fehler für betreffendes Pulver und für das zum Einsatz kommende Strahlenbündel betrug viel kleiner als 20 Minuten.

Beispiel 4

Nachstehend ist ein Beispiel für die Durchführung des erfindungsgemässen Verfahrens zur Sedimentationsanalyse des Dispersionsgrades (Fig.1) angeführt, in dem im stationären Betrieb (Beispiel 2) und im Abtastungsbetrieb (Beispiel 3) gearbeitet wurde.

Dabei:

- wird ein divergentes Strahlenbündel von der Strahlungsquelle 3 benutzt, das im Schnitt einen Kreis aufweist, dessen Achse unter einem Winkel $\beta$ von 15° zur Sedimentationsrichtung gerichtet ist;
- kommt als Strahlungsquelle ein Helium-Neon-Laser zum Einsatz;
- beträgt der Divergenzwinkel $\theta = 10^{-3}$ Rad.

Ausgehend davon, dass $\theta \ll \beta$ und von der Bedingung

$$L_4 \sin(\beta + \theta/2) - L_5 \sin(\beta - \theta/2) \leqq 2{,}83\ H\sigma^{1/2}$$

worin $L_4$ den grössten Abstand von der Strahlungsquelle 3 bis zur Schnittpunkt $y_2$ zwischen dem Strahlenbündel und der ferner Küvettenwand bedeutet;

$L_5$ den kleinsten Abstand von der Strahlungsquelle 3 bis zum Schnittpunkt $y_1$ zwischen dem Strahlenbündel und der nahen Küvettenwand bedeutet.

Bei der technischen Anwendung kann man die Abstände $L_4$,$L_5$ beliebig einstellen.

Der vorgegebene methodische Fehler $\sigma$ beträgt 0,15%, die Messtemperatur T = 20°C.

Man bestimmte die Länge h der Projektion der Strecke zwischen zwei am meisten voneinander entfernten Punkten $y_1$ und $y_2$ zweier vom ungestreuten Strahlenbündel an den Wänden der unbefüllten Küvette gebildeter Lichtflecke auf die zur Sedimentaionsachse A parallel verlaufende Achse 6, welche Länge $h = 1{,}3 \bullet 10^{-2}$ m beträgt;

Man bestimmt $H = 0{,}35\ (h/\sigma)^{1/2}$, wofür man das Strahlenbündel so anordnet, dass die Mitte der Strecke h sich in einer Tiefe (H + ΔH) vom Suspensionsspiegel befinden sollte, wobei diese Grösse kleiner als der Abstand zwischen Suspensionsspiegel und Küvettenboden ist.

Bei der Dispersionsflüssigkeit handelte es sich um distilliertes Wasser $\alpha = 35 \bullet 10^5\ m^{-1} \bullet s^{-1}$.

Es wurde

- das Strahlenbündel durch die unbefüllte Küvette passieren gelassen und der vom ungestreuten Strahl erzeugte Fotostrom zu $I_o = 207$ mA bestimmt;
- in die Messküvette mit Hilfe eines Dosierers eine durch Vermischen von Quarzsand mit Wasser zubereitete Suspension eingefüllt;
- die Zeitspanne $\tau_2$ gemessen, während der die optische Dichte der Suspension dispergierter Pulverteilchen ab Zeitpunkt des Sedimentationsbeginns konstant bleibt;

- die relative optische Dichte

  $D(t) = \ln I_o/I(t)$

  der Suspension gemessen;
- der maximale Radius der grössten Teilchen, die sich auf den Küvettenboden für die Zeit $\tau_2$ absetzen, im realen Zeitmasstab

$$r_{max} = \sqrt{\frac{H + \Delta H}{\alpha \tau_2}}$$

  am Rechner errechnet;
- das Strahlenbündel 4 und der Lichtempfänger 5 in der Sedimentationsrechnung entgegengesetzter Richtung mit einer gleichbleibenden Geschwindigkeit U

  $U < \alpha r^2_{max} \cdot \frac{\Delta H}{H}$

  bewegt;
- die Abtastungszeit $T = \frac{\Delta H}{U}$ bestimmt,
- mit der Bewegung des Strahlenbündels beim Erreichen der Tiefe H durch das Strahlenbündel aufgehört;

Wenn der Sedimentationsvorgang zum Zeitpunkt der Aufhörens der Abtastung nicht zu Ende gegangen ist, wurde die Messung im stationären Betrieb (Beispiel 2) fortgesetzt, bis die Werte $I(t) \ll I_o$ erhalten worden sind, worauf der Messvorgang beendet wurde.

Aufgrund der festgestellten Werte dieser Grössen bestimmt man die Verteilungsdiche $\nu(r)$ der Pulverteilchen und die Dichte $\mu(r)$ der Verteilung der Pulvermasse nach Teilchenradienwerten nach den Formeln 22, 26 für die Werte der Laufzeit, während der im stationären Betrieb gearbeitet wurde.

Dabei werden manche Zeitfunktionen wie: $A_1(t)$,$B_1(t)$,$C(\tau_2,T)$, $A_2(t)$ und $B_2(t)$ für Werte $H(t) = H = const$ bei $t \geqq T$ berechnet.

Dann wurde die Bestimmung der Verteilungsdichten für die Laufzeit vorgenommen, während der im Abtastungsbetrieb gearbeitet wurde (siehe Beispiel 3).

Ausserdem ermittelt man ohne direktes Bestimmen dieser Verteilungsfunktionen betreffende integrale Charakteristiken des Dispersionsgrades der Pulverteilchen, und zwar den Mittelwert des Radius $\langle r \rangle$ der dispergierten Teilchen, den Mittelpunkt des Radiusquadrats $\langle r^2 \rangle$ und die Standardabweichung $\Delta$ nach den Formeln 30, 22.

Dabei werden einige Zeitfunktionen wie $B_1(t)$ und $B_3(t)$, die bei der Bestimmung von $\langle r \rangle$ oder $\langle r^2 \rangle$ zum Einsatz kommen, für den Abtastungsbetrieb mit $H(t) = = H + \Delta H - Ut$ bei $\tau \leqq t \leqq T$ und für den stationären Betrieb mit $H(t) = H = constant$ bei $t \geqq T$ berechnet.

Die Zeit der Analyse unter Benutzung zweier Messungsarten mit einem vorgegebenen Messgenauigkeitswert für betreffendes Pulver und das zum Einsatz kommende Strahlenbündel betrug weniger als 20 Minuten.

Gewerbliche Verwertbarkeit

Das erfindungsgemässe fotoelektrische Verfahren zur Sedimetationsanalyse disperser Systeme einer einheitlichen stofflichen Zusammensetzung eignet sich praktisch für die Pharmakologie, für die Lebensmittelindustrie bei der Herstellung von Stärke, Mehl, Trockenmilch, Schokolade, Kaffe usw., bei der Herstellung von Mineraldüngemitteln und Pflanzenschutzmitteln, synthetischen Werkstoffen, Metallpulvern, für die Pulvermetallurgie, bei der Herstellung von Baustoffen z.B. Zement, Keramik, Quarz, Glas, Ton usw., dür die Lack-und Farbenindustrie.

Das in Betracht stehende Verfahren reduziert erheblich die Zeit für die Analyse des Dispersionsgrades von in technologischen Prozessen zur Einsatz kommenden Pulvern, was Vorteile einer höheren Produktionsqualität und herabgestzter Energieaufwände mit sich bringt.

**Patentansprüche**

1. Fotoelektrisches Verfahren zur Sedimentationsanalyse disperser Systeme einer homogenen stofflichen Zusammensetzung, darin bestehend, dass man

ein Strahlenbündel durch eine unbefüllte Küvette passieren lässt und den Anfangswert des von durch die unbefüllte Küvette durchgegangenen ungestreuten Strahl erzeugten Fotostroms misst,

die Küvette mit einer Suspension gleichmässig in der Flüssigkeit dispergierter Pulverteilchen befüllt,

im Laufe der Sedimentation die Werte des vom durch die Küvette durchgegangenen ungestreuten Strahlanteils erzeugten Fotostroms misst,

die relative optische Dichte D(t) der Suspension dispergierter Pulverteilchen nach der Formel

$D(t) = \ln I_o/I_t$

misst, worin $I_o$ die vom durch die unbefüllte Küvette durchgegangenen ungestreuten Strahl erzeugte Fotostromstärke ist und $I_t$ die vom durch die Küvette durchgegangenen ungestreuten Strahlanteil erzeugte Fotostromstätke zum Laufzeitpunkt t ist, und die Radienwerte r der sich in der Suspension absetzenden Teilchen nach der Stokesschen Formel

$V = \alpha r^2$

bestimmt, worin: V die Absetzgeschwindigkeit ist und $\alpha$ den Proportionalitätskoeffizienten bedeutet, der nach der Formel

$$\alpha = \frac{2(\rho_m - \rho_g)\,g}{9\,\eta}$$

worin $\rho_m$ die Dichte der Pulverteilchen, $\rho_g$ die Dichte der flüssigen Phase bei der Messungstemperatur, g die Fallbeschleunigung, $\eta$ die dynamische Viskosität der flüssigen Phase bei der Messungstemperatur bedeuten, ermittelt wird, dadurch gekennzeichnet, dass man

das Strahlenbündel einer beliebigen Querschnittsform von einer Strahlungsquelle verwendet und

für jede zum Einsatz kommende Form des Strahlenbündels die Länge h der Projektion der Strecke zwischen zwei am meisten voneinander entfernten Punkten zweier vom ungestreuten Strahlenbündel an den Wänden der unbefüllten Küvette gebildeter Lichtflecke auf eine zur Sedimentationsrichtung parallel verlaufende Achse bestimmt,

einem Wert des relativen methodischen Fehlers $\sigma$ nach der Formel

$\sigma = 0{,}5(h/2H)^2$,

in der die Grösse H aus der Formel $H = 0{,}35(h/\sigma)^{1/2}$ zu bestimmen ist, im Bereich von 0,1% bis 0,00001% vorgibt,

das Strahlenbündel so anordnet, dass sich die Mitte der Strecke h in einer Tiefe H von Suspensionsspiegel befinden soll,

die Zeitspanne $\tau$ misst, während der die optische Dichte der Suspension dispergierter Pulverteilchen ab Zeitpunkt des Sedimentationsbeginns konstant bleibt und die relative optische Dichte der Suspension $D(\tau)$ in dieser Zeitspanne $\tau$ nach der Formel

$D(\tau) = \ln I_o/I_t$

misst,

nach der Stokesschen Formel unter Berücksichtigung dieser Zeitspanne $\tau$ den Radius $r_{max}$ der grössten Pulverteilchen nach der Formel

$r_{max} = \sqrt{\frac{H}{\alpha\tau}}$

bestimmt,

die Änderungsgeschwindigkeit der relativen optischen Dichte $V_D$ bei $t > \tau$ nach der Formel

$$V_D = \frac{dD(t)}{dt}$$

bestimmt und

die Verteilungsdichte $\nu(r)$ der Pulverteilchen als Funktion des Radius nach der Formel

$$\nu(r) = -\frac{2}{r_{max}} \cdot \frac{t^{5/2} V_D(t) \,|\, t = H/\alpha \cdot r^2}{\tau^{3/2} D(\tau) + \tau^{1/2} \int_{\tau}^{\infty} dt D(t)}$$

bestimmt.

**2.** Fotoelektrisches Verfahren nach Anspruch 1, dadurch gekennzeichnet, dass bei der Durchführung der Sedimentationsanalyse disperser Systeme mit einem Strahlenbündel abgetastet wird, wofür man des Strahlenbündel so anordnet, dass sich die Mitte der Strecke h in einer Tiefe (H + ΔH) vom Suspensionsspiegel befindet, wobei

$(H + \Delta H) < H_{max}$

worin $H_{max}$ für den Abstand zwischen Suspensionsspiegel und Küvettenboden steht,

nach Befüllen der Küvette mit einer Suspension gleichmässig in der Flüssigkeit dispergierter Pulverteilchen das Strahlenbündel in der Sedimentationsrichtung entgegengesetzter Richtung mit einer gleichbleibenden Geschwindigkeit U, die sich aus der Formel

$U < \alpha r^2_{max} \cdot \frac{\Delta H}{H}$

ergibt, bewegt,

die Zeitspanne $\tau_1$ misst, während der die optische Dichte der Suspension dispergierter Pulverteilchen ab Zeitpunkt des Abtastungsbeginns konstant bleibt,

nach der Stokeschen Formel unter Berücksichtigung der Zeitspanne $\tau_1$ den Radius der grössten Pulverteilchen

$$r_{max} = \sqrt{\frac{H + \Delta H - U\tau_1}{\alpha \tau_1}}$$

bestimmt,

die Abtastungszeit T = ΔH/U ermittelt und

die Verteilungsdichte $\nu(r)$ der Pulverteilchen als Funktion des Radius nach der Formel

$$\nu(r) = -\frac{2}{r_{max}} \frac{A_1(t) t^{5/2} V_D(t) / \; t = H(t)/\alpha r^2}{\tau_1^{3/2} D(\tau_1) + \tau_1^{1/2} \int_{\tau_1}^{\infty} dt\, B_1(t) D(t)}$$

bestimmt, worin

$$A_1(t) = \begin{cases} \dfrac{(H+\Delta H - U\tau_1)^{3/2}}{(H+\Delta H)(H+\Delta H - Ut)^{1/2}} & \text{bei } \tau_1 \leq t \leq T \\[2ex] \dfrac{(H+\Delta H - U\tau_1)^{3/2}}{(H+\Delta H - UT)^{3/2}} & \text{bei } t > T \end{cases}$$

$$B_1(t) = \begin{cases} \dfrac{(H+\Delta H)(H+\Delta H - U\tau_1)}{(H+\Delta H - Ut)^2} & \text{bei } \tau_1 \leq t \leq T \\[2ex] \dfrac{H+\Delta H - U\tau_1}{H+\Delta H - UT} & \text{bei } t > T \end{cases}$$

und mit der Abtastung beim Erreichen der Tiefe H durch das Strahlenbündel aufhört.

**3.** Fotoelektrisches Verfahren nach Anspruch 1, dadurch gekennzeichnet, dass bei der Durchführung der Sedimentationsanalyse disperser Systeme mit einem Strahlenbündel abgetastet wird, wofür man das Strahlenbündel so anordnet, dass sich die Mitte der Strecke h in einer Tiefe (H + ΔH) vom Suspensionsspiegel befindet, wobei $(H + \Delta H) < H_{max}$ ist, worin $H_{max}$ den Abstand zwischen Suspensionsspiegel und Küvettenboden bedeutet,

nach Befüllen den Küvette mit einer Suspension gleichmässig in der Flüssigkeit dispergierter Pulverteilchen vor Abtastungsbeginn die Zeitspanne $\tau_2$ misst, während der die optische Dichte der Suspension dispergierter Pulverteilchen ab Zeitpunkt de Sedimentationsbeginns konstant bleibt,

nach der Stokesschen Formel unter Mitrechnung dieser Zeitspanne $\tau_2$ den Radius $r_{max}$ der grössten Pulverteilchen nach der Formel

$$r_{max} = \sqrt{\frac{H+\Delta H}{\alpha \tau_2}}$$

ermittelt,

ab Zeitpunkt $\tau_2$ das Strahlenbündel in der Sedimentationsrichtung entgegengesetzter Richtung mit einer gleichbleibenden Geschwindigkeit U, die sich aus der Formel

$U < \alpha r^2_{max} \cdot \frac{\Delta H}{H}$

ergibt, bewegt,

die Abtastungszeit $T = \frac{\Delta H}{H}$ bestimmt,

die Verteilungsdichte $\nu(r)$ der Pulverteilchen als Funktion des Radius nach der Formel

$$\nu(r) = -\frac{2}{r_{max}} \left. \frac{A_1(t)\, t^{5/2}\, v_D(t)}{\tau_2 D(\tau_2) + \tau_2^{1/2} \int_{\tau_2}^{\infty} dt B_1(t) D(t)} \right|_{t = H(t)/\alpha r^2}$$

bestimmt, worin:

$$A_1(t) = \begin{cases} \dfrac{(H+\Delta H - U\tau_2)^{3/2}}{(H+\Delta H)(H+\Delta H - Ut)^{1/2}} & \text{bei } \tau_2 \leqslant t \leqslant T \\ \dfrac{(H+\Delta H - U\tau_2)^{3/2}}{(H+\Delta H - UT)^{3/2}} & \text{bei } t > T \end{cases}$$

$$B_1(t) = \begin{cases} \dfrac{(H+\Delta H)(H+\Delta H - U\tau_2)}{(H+\Delta H - Ut)^2} & \text{bei } \tau_2 \leqslant t \leqslant T \\ \dfrac{H+\Delta H + U\tau_2}{H+\Delta H - UT} & \text{bei } t > T \end{cases}$$

und mit der Abtastung beim Erreichen der Tiefe H durch das Strahlenbündel aufhört.

**4.** Fotoelektrisches Verfahren zur Sedimentationsanalyse disperser Systeme einer homogenen stofflichen Zusammensetzung darin bestehend, dass man

ein Strahlenbündel durch eine unbefüllte Küvette passieren lässt und den Anfangswert des vom durch die unbefüllte Küvette durchgegangenen ungestreuten Strahl erzeugten Fotostroms misst,

die Küvette mit einer Suspension gleichmässig in der Flüssigkeit dispergierter Pulverteilchen befüllt,

im Laufe der Sedimentation die Werte des vom durch die Küvette durchgegangenen ungestreuten Strahlanteil erzeugten Fotostromsmisst,

die relative optische Dichte D(t) der Suspension dispergierter Pulverteilchen nach der Formel

$$D(t) = \ln I_o/I_t$$

misst, worin $I_o$ die vom durch die unbefüllte Küvette durchgegangenen ungestreuten Strahl erzeugte Fotostromstärke ist und $I_t$ die vom durch die Küvette durchgegangenen ungestreuten Strahlanteil zum Laufzeitpunkt t erzeugte Fotostromstärke ist,

und nach der Stokesschen Formel

$$V = \alpha r^2$$

die Radienwerte r der sich in der Suspension absetzenden Teilchen ermittelt, worin V die Absetzgeschwindigkeit der Teilchen bedeutet und $\alpha$ für den Proportionalitätskoeffizienten steht, de sich aus der Formel

$$\alpha = \frac{2(\rho_m - \rho_g)g}{9\eta}$$

ergibt, worin $\rho_m$ die Dichte der Pulverteilchen, $\rho_g$ die Dichte der flüssigen Phase der Suspension, $\eta$ die dynamische Viskosität der Flüssigen Phase bei der Messungstemperatur, g die Fallbeschleunigung bedeuten, dadurch gekennzeichnet, dass man

das Strahlenbündel einer beliebigen Querschnittsform von einer Strahlungsquelle verwendet und

für jede zum Einsatz kommende Form des Strahlenbündels die Länge h der Projektion der Strecke zwischen zwei am meisten voneinander entfernten Punkten zweier vom ungestreuten Strahlenbündel an den Wänden der unbefüllten Küvette gebildeter Lichtflecke auf eine parallel zur Sedimentationsrichtung verlaufende Achse bestimmt,

einen Wert des relativen methodischen Fehlers $\sigma$ nach der Formel

$\sigma = 0{,}5(h/2H)^2$,

in der die Grösse H aus der Formel $H = 0{,}35(h/\sigma)^{1/2}$ zu bestimmen ist, im Bereich von 0,1% bis 0,00001% vorgibt,

das Strahlenbündel so anordnet, dass sich die Mitte der Strecke h in einer Tiefe H vom Suspensionsspiegel befindet,

die Zeitspanne $\tau$ misst, während der die optische Dichte der Suspension dispergierter Pulverteilchen ab Zeitpunkt des Sedimentationsbeginns konstant bleibt, und die relative optische Dichte $D(\tau)$ der Suspension in dieser Zeitspanne nach der Formel

$D(\tau) = \ln I_o/I_t$

misst,

nach der Stokesschen Formel unter Mitrechnung dieser Zeitspanne den Radius $r_{max}$ der grössten Pulverteilchen nach der Formel

$r_{max} = \sqrt{\frac{H}{\alpha\tau}}$

ermittelt,

die Änderungsgeschwindigkeit der relativen optischen Dichte $V_D$ bei $t > \tau$ nach der Formel

$$V_D = \frac{dD(t)}{dt}$$

bestimmt und

die Verteilungsdichte $\mu(r)$ der Pulvermasse nach Radienwerten der Pulverteilchen nach der Formel

$$\mu(r) = -\frac{2}{r_{max}} \frac{tV_D(t) \;/\; t = H/\alpha r^2}{D(\tau) - \frac{1}{2}\tau^{1/2}\int_{\tau}^{\infty}\frac{dt}{t^{3/2}} D(t)}$$

bestimmt.

**5.** Fotoelektrisches Verfahren nach Anspruch 4, dadurch gekennzeichnet, dass bei der Durchführung der Sedimentationsanalyse disperser Systeme mit einem Strahlenbündel abgetastet wird, wofür man

das Strahlenbündel so anordnet, dass sich die Mitte der Strecke h in einer Tiefe $(H + \Delta H)$ vom Suspensionsspiegel befindet, wobei

$(H + \Delta H) < H_{max}$

worin $H_{max}$ den Abstand zwischen Suspensionsspiegel und Küvettenboden bedeutet,

nach Befüllen der Küvette mit einer Suspension gleichmässig in der Flüssigkeit dispergierter Pulverteilchen das Strahlenbündel in der Sedimentationsrichtung entgegen esetzter Richtung mit einer gleichbleibenden Geschwindigkeit U, die sich aus der Formel

$U < \alpha r^2_{max} \cdot \frac{\Delta H}{H}$

ergibt, bewegt,

die Zeitspanne $\tau_1$, während der die optische Dichte der Suspension dispergierter Pulverteilchen ab Zeitpunkt des Abtastunsbeginns konstant bleibt, misst,

nach der Stokesschen Formel unter Mitrechnung der Zeitspanne den Radius der grössten Pulver-

teilchen

$$r_{max} = \sqrt{\frac{H + \Delta H - U\tau_1}{\alpha \tau_1}}$$

ermittelt,

die Abtastungszeit T = ΔH/U bestimmt und

die Verteilungsdichte μ(r) der Pulvermasse als Funktion des Radius nach der Formel

$$\mu(r) = \frac{2}{r_{max}} \cdot \frac{A_2(t) \cdot V_D(t) \Big|\, t = H(t) \,/\, \alpha r^2}{D(\tau_1) + C(\tau_1, T)\, D(T) - \frac{1}{2}\tau_1^{1/2} \int_{\tau_1}^{\infty} \frac{dt}{t^{3/2}} B_2(t) D(t)}$$

bestimmt, worin:

$$A_2(t) = \begin{cases} \dfrac{H + \Delta H - Ut}{H + \Delta H} & \text{bei } \tau_1 \leq t \leq T \\ 1 & \text{bei } t > T \end{cases}$$

$$C(\tau_1, T) = \left\{ \left( \frac{\tau_1}{T} \right)^{1/2} \left[ \frac{(H + \Delta H - UT)^2}{(H + \Delta H - U\tau_1)^2} - \frac{(H + \Delta H - UT)^{1/2}}{(H + \Delta H - U\tau_1)^{1/2}} \right] \right.$$

$$B_2(t) = \begin{cases} \dfrac{H + \Delta H}{(H + \Delta H - Ut)^{1/2} (H + \Delta H - U\tau_1)^{1/2}} & \text{bei } t \leq T \\ \dfrac{(H + \Delta H - UT)^{1/2}}{(H + \Delta H - U\tau_1)^{1/2}} & \text{bei } t \geq T \end{cases}$$

mit der Abtastung beim Erreichnen der Tiefe H durch das Strahlenbündel aufhört.

**6.** Fotoelektrisches Verfahren nach Anspruch 4, dadurch gekennzeichnet, dass bei der Durchführung der Sedimentationsanalyse mit einem Strahlenbündel abgetastet wird, wofür man das Strahlenbündel so anordnet, dass sich die Mitte der Strecke in einer Tiefe (H + ΔH) von Suspensionspiegel befindet, wobei

$(H + \Delta H) < H_{max}$

worin $H_{max}$ den Abstand zwischen Suspensionsspiegel und Küvettenboden bedeutet,

nach Befüllen der Küvette mit einer Suspension gleichmässig in der Flüssigkeit dispergierter Pulverteilchen vor Abtastungsbeginn die Zeitspanne $\tau_2$ misst, während der die optische Dichte der Suspension dispergierter Pulverteilchen ab Zeitpunkt des Sedimentationsbeginns konstant bleibt,

nach der Stokesschen Formel unter Mitrechnung dieser Zeitspanne $\tau_2$ den Radius $r_{max}$ der grössten Pulverteilchen nach der Formel

$$r_{max} = \sqrt{\frac{H + H}{\alpha \tau_2}}$$

ermittelt,

ab Zeitpunkt $\tau_2$ das Strahlenbündel in der Sedimentationsrichtung entgegangesetzter Richtung mit einer gleichbleibenden Geschwindigkeit U, die sich aus der Formel

$U < \alpha r^2_{max} \cdot \frac{\Delta H}{H}$

ergibt, bewegt,

die Abtastungszeit T = ΔH/U bestimmt und

die Verteilungsdichte $\mu(r)$ der Pulvermasse nach Radienwerten der Pulverteilchen

$$\mu(r) = -\frac{2}{r_{max}} \cdot \frac{A_2(t) + V_D(t) / _{t = H(t)/\alpha r^2}}{D(\tau_2) + C(\tau_2, T) D(T) - \frac{\tau_2^{1/2}}{2} \int_{\tau_2}^{\infty} \frac{dt}{t^{3/2}} B_2(t) D(t)}$$

bestimmt, worin:

$$A_2(t) = \begin{cases} \frac{H + \Delta H - Ut}{H + \Delta H} & \text{bei } \tau_2 \leq t \leq T \\ 1 & \text{bei } t > T \end{cases}$$

$$C(\tau_2, T) = \left(\frac{\tau^2}{T}\right)^{1/2} \left[ \frac{(H + \Delta H - UT)^2}{(H + \Delta H - U\tau_2)^2} - \frac{(H + \Delta H - UT)^{1/2}}{(H + \Delta H - U\tau_2)^{1/2}} \right]$$

$$B_2(t) = \begin{cases} \frac{H + \Delta H}{(H + \Delta H - Ut)^{1/2} (H + \Delta H - U\tau_2)^{1/2}} & \text{bei } t \leq T \\ \frac{(H + \Delta H - UT)^{1/2}}{(H + \Delta H - U\tau_2)^{1/2}} & \text{bei } t \geq T \end{cases}$$

und mit der Abtastung beim Erreichen der Tiefe H durch das Strahlenbündel aufhört.

**7.** Fotoelektrisches Verfahren zur Sedimentationsanalyse disperser Systeme einer homogenen stofflichen Zusammensetzung darin bestehend, dass man

ein Strahlenbündel durch eine unbefüllte Küvette passieren lässt und den Anfangswert des vom durch die unbefüllte Küvette durchgegangenen ungestreuten Strahl erzeugten Fotostroms misst,

die Küvette mit einer Suspension gleichmässig in der Flüssigkeit dispergierter Pulverteilchen befüllt,

im Laufe der Sedimentation die Werte des vom durch die Küvette durchgegangenen ungestreuten Strahlanteil erzeugten Fotostroms misst,

die relative optische Dichte D(t) der Suspension dispergierter Pulverteilchen nach der Formel

$$D(t) = \ln I_o/I_t$$

bestimmt, worin $I_o$ die vom durch die unbefüllte Küvette durchgegangenen ungestreuten Strahl erzeugte Fotostromstärke ist, $I_t$ die vom durch die Küvette durchgegangenen ungestreuten Strahlanteil zum Laufzeitpunkt t erzeugte Fotostromstärke ist,

die Radienwerte r der sich in der Suspension absetzenden Teilchen nach der Stokesschen Formel

$$V = \alpha r^2$$

bestimmt, worin V die Absetzgeschwindigkeit der Teilchen ist und $\alpha$ für den Proportionalitätskoeffizienten steht, der sich aus der Formel

$$\alpha = \frac{2}{9} \frac{(\rho_m - \rho_g) g}{\eta}$$

ergibt, worin $\rho_m$ die Dichte der Pulverteilchen, $\rho_g$ die Dichte der flüssigen Phase der Suspension, $\eta$ die dynamische Viskosität der flüssigen Phase bei der Messungstemperatur, g die Fallbeschleunigung bedeuten, dadurch gekennzeichnet, dass man

Strahlenbündel einer beliebigen Querschnittsform von einer Strahlungsquelle verwendet und

für jede zum Einsatz kommende Form des Strahlenbündels die Länge h der Projektion der Strecke zwischen zwei am meisten voneinander entfernten Punkten zweier vom ungestreuten Strahlenbündel an den Wänden der unbefüllten Küvette gebildeter Lichtflecke auf eine parallel zur Sedemintationsrichtung verlaufende Achse bestimmt,

einen Wert des relativen methodischen Fehlers $\sigma$ nach der Formel

$$\sigma = 0{,}5\ (h/2H)^2$$

in der die Grösse H aus der Formel $H = 0{,}35(h/\sigma)^{1/2}$ zu bestimmen ist, im Bereich von 0,1% bis 0,00001% vorgibt,

das Strahlenbündel so anordnet, dass sich die Mitte der Strecke h in einer Tiefe H vom Suspensionsspiegel befindet,

die Zeitspanne $\tau$ misst, während der die optische Dichte der Suspension dispergierter Pulverteilchen ab Zeitpunkt des Sedimentationsbeginns konstant bleibt, und die relative optische Dichte der Suspension $D(\tau)$ in dieser Zeitspanne nach der Formel

$$D(\tau) = \ln I_o/I_t$$

misst,

nach der Stokesschen Formel unter Mitrechnung dieser Zeitspanne $\tau$ den Radius der grössten Pulverteilchen nach der Formel

$$r_{max} = \sqrt{\frac{H}{\alpha\tau}}$$

bestimmt,

die Änderungsgeschwindigkeit der relativen optischen Dichte $V_D$ bei $t > \tau$ nach der Formel

$$V_D = \frac{dD(t)}{dt}$$

bestimmt und

integrale Charakteristiken des Dispersionsgrades der Pulverteilchen wie den Mittelwert des Radius ⟨r⟩ der Pulverteilchen nach der Formel

$$\langle r \rangle = r_{max} \frac{1 + \frac{1}{2\tau^{1/2} D(t)} \int_{\tau}^{\infty} \frac{dt}{t^{1/2}} D(t)}{1 + \frac{1}{\tau D(\tau)} \cdot \int_{\tau}^{\infty} dt D(t)}$$

den Mittelwert des Radiusquadrats ⟨$r^2$⟩ der Pulverteilchen nach der Formel

$$\langle r^2 \rangle = \frac{r^2_{max}}{1 + \frac{1}{\tau D(\tau)} \int_{\tau}^{\infty} dt D(t)}$$

und die Standardabweichung Δ zwischen dem Radius und dem Radiusquadrat nach der Formel

$$\Delta = \frac{(\langle r^2 \rangle - \langle r \rangle^2)^{1/2}}{\langle r \rangle}$$

bestimmt.

**8.** Fotoelektrisches Verfahren nach Anspruch 8, dadurch gekennzeichnet, dass bei der Durchführung der Sedimentationsanalyse disperser Systeme mit einem Strahlenbündel abgetastet wird, wofür man das Strahlenbündel so anordnet, dass sich die Mitte der Strecke h in einer Tiefe (H + ΔH) vom Suspensionsspiegel befindet, wobei

$(H + \Delta H) < H_{max}$,

worin $H_{max}$ den Abstand zwischen Suspensionsspiegel und Küvettenboden bedeutet,

nach Befüllen der Küvette mit einer Suspension gleichmässig in der Flüssigkeit dispergierter Pulverteilchen das Strahlenbündel in der Suspensionsrichtung entgegengesetzter Richtung mit einer gleichbleibenden Geschwindigkeit U bewegt, die sich aus der Formel

$U < \alpha r^2_{max} \cdot \frac{\Delta H}{H}$

ergibt,

die Zeitspanne $\tau_1$, während der die optische Dichte der Suspension dispergierter Pulverteilchen ab Zeitpunkt des Abtastungsbeginns konstant bleibt, misst,

nach der Stokesscehn Formel unter Mitrechnung der Zeitspanne $\tau_1$ den Radius der grössten Pulverteilchen

$$r_{max} = \sqrt{\frac{H + \Delta H - U\tau_1}{\alpha \tau_1}}$$

ermittelt,

die Abtastungszeit T = ΔH/U bestimmt und

integrale Charakteristiken des Dispersionsgrades der Pulverteilchen wie: den Mittelwert ⟨r⟩ der Pulverteilchen nach der Formel

$$\langle r \rangle = r_{max} \frac{1 + \frac{1}{2\tau_1^{1/2} D(\tau_1)} \int_{\tau_1}^{\infty} \frac{dt}{t^{1/2}} B_3(t) D(t)}{1 + \frac{1}{\tau_1 D(\tau_1)} \int_{\tau_1}^{\infty} dt\, B_1(t)\, D(t)}$$

worin $B_1$ oben definiert ist,

$$B_3(t) = \begin{cases} \dfrac{H + \Delta H}{H + \Delta H - Ut} & \text{bei } t \leq T \\[2ex] \dfrac{(H + \Delta H - U\tau_1)^{1/2}}{(H + \Delta H - UT)^{1/2}} & \text{bei } t \geq T \end{cases}$$

den Mittelwert des Radiusquadrats $\langle r^2 \rangle$ des Pulvers nach der Formel

$$\langle r^2 \rangle = \frac{r_{max}^2}{1 + \frac{1}{\tau_1 D(\tau_1)} \cdot \int_{\tau_1}^{\infty} dt B_1(t)\ D(t)}$$

und die Standardabweichung $\Delta$ zwischen dem Radius und dem Radiusquadrat

$$\Delta = \frac{(\langle r^2 \rangle - \langle r \rangle^2)^{1/2}}{\langle r \rangle}$$

bestimmt und

mit der Abtastung beim Erreichen der Tiefe H durch das Strahlenbündel aufhört.

**9.** Fotoelektrisches Verfahren nach Anspruch 7, dadurch gekennzeichnet, dass bei der Durchführung der Sedimentationsanalyse mit einem Strahlenbündel abgetastet wird, wofür man das Strahlenbündel so anordnet, dass sich die Mitte der Strecke in einer Tiefe $(H + \Delta H)$ vom Suspensionsspiegel befindet, wobei

$(H + \Delta H) < H_{max}$ ,

worin $H_{max}$ den Abstand zwischen Suspensionsspiegel und Küvettenboden bedeutet,

nach Befüllen der Küvette mit einer Suspension gleichmässig in der Flüssigkeit dispergierter Pulverteilchen vor Abtastungsbeginn die Zeitspanne $\tau_2$ misst, während der die optische Dichte der Suspension dispergierter Pulverteilchen ab Zeitpunkt des Sedimentationsbeginns konstant bleibt,

nach der Stokesschen Formel unter Mitrechnung dieser Zeitspanne $\tau_2$ den Radius $r_{max}$ der grössten Pulverteilchen nach der Formel

$$r_{max} = \sqrt{\frac{H + \Delta H}{\alpha \tau_2}}$$

bestimmt,

ab Zeitpunkt $\tau_2$ das Strahlenbündel in der sedimentationsrichtung entgegengesetzter Richtung mit einer gleichbleibenden Geschwindigkeit U, die sich aus der Formel

$U<\alpha r^2_{max} \bullet \frac{\Delta H}{H}$

ergibt, bewegt,

die Abtastungszeit T = ΔH/U bestimmt und

integrale Charakteristiken des Dispersionsgrades der Pulverteilchen wie: den Mittelwert des Radius ⟨r⟩ der Pulverteilchen nach der Formel

$$\langle r \rangle = r_{max} \frac{1+ \dfrac{1}{2\tau_2^{1/2} D(\tau_2)} \displaystyle\int_{\tau_2}^{\infty} \frac{dt}{t^{1/2}} \bullet B_3(t) D(t)}{1+ \dfrac{1}{\tau_2 D(\tau_2)} \displaystyle\int_{\tau_2}^{\infty} dt B_1(t) D(t)}$$

worin $B_1$ oben definiert ist,

$$B_3(t) = \begin{cases} \dfrac{H + \Delta H}{H + \Delta H - Ut} & \text{bei } t \leqslant T \\[2ex] \dfrac{(H + \Delta H - U\tau_2)^{1/2}}{(H + \Delta H - UT)^{1/2}} & \text{bei } t \geqslant T \end{cases}$$

den Mittelwert des Radiusquadrats ⟨$r^2$⟩ der Pulverteilchen nach der Formel

$$\langle r^2 \rangle \frac{r^2_{max}}{1 + \dfrac{1}{\tau_2 D(\tau_2)} \displaystyle\int_{\tau_2}^{\infty} dt\ B_1(t) D(t)}$$

und die Standardabweichung Δ zwischen dem Radius und dem Radiusquadrat

$$\Delta = \frac{(\langle r^2 \rangle - \langle r \rangle^2)^{1/2}}{\langle r \rangle}$$

bestimmt und

mit der Abtastung beim Erreichen der Tiefe H durch das Strahlenbündel aufhört.

**10.** Fotoelektrisches Verfahren nach einem beliebigen der vorangehenden Ansprüche, dadurch gekennzeichnet, dass man

die Suspension gleichmässig in der Flüssigkeit dispergierter Pulverteilchen auf eine Temperatur T°K erwärmt, bei der die Brownsche Bewegung der feinsten Pulverteilchen mit einem Radius im Bereich von 5 µm bis 0,01 µm vernachlässigt werden kann,

proportional zum Temperaturanstieg den Abstand H vom Suspensionsspiegel bis zur Mitte der Strecke h so vergrössert, dass die Bedingung

$$\frac{0{,}12 \cdot k}{\sigma(\rho_m - \rho_g)\, g \quad r^3_{min}} \cdot \frac{T}{k} \ll 1$$

worin K die Boltzmannsche Konstane ist, eingehalten ist.

**11.** Fotoelektrisches Verfahren nach Ansprüchen 1 bis 10, dadurch gekennzeichnet, dass man ein Strahlenbündel zylindrischer Form mit dem Querschnittsradius R verwendet, dessen Achse senkrecht auf der Sedimentationsrichtung steht und in einer Tiefe H liegt.

**12.** Fotoelektrisches Verfahren nach Ansprüchen 1 bis 10, dadurch gekennzeichnet, dass man ein Strahlenbündel zylindrischer Form mit dem Querschnittsradius R verwendet, dessen Achse unter einem Einfallwinkel $\beta$ zur Sedimentationsrichtung liegt und sich aus der Bedingung

$$L \; tg\beta + \frac{2R}{\cos\beta} \leq 2{,}83 \; H\sigma^{1/2}$$

worin L den Abstand zwischen den Küvettenwänden bedeutet, ergibt.

**13.** Fotoelektrisches Verfahren nach Ansprüchen 1 bis 10, dadurch gekennzeichnet, dass man ein konvergentes Strahlenbündel verwendet, dessen Achse senkrecht auf der Sedimentationsrichtung steht und der Konvergenzwinkel $\gamma$ sich aus der Bedingung

$$2(L + L_o)\; tg\frac{\gamma}{2} \leqq 2{,}83\; H\sigma^{1/2}$$

worin $L_o$ den Abstand vom der Kegelspitze bis zur nächstliegenden Küvettenwand in der Normalen bedeutet, ergibt.

**14.** Fotoelektrisches Verfahren nach Ansprüchen 1 bis 10, dadurch gekennzeichnet, dass man ein konvergentes Strahlenbündel verwendet, dessen Achse unter einem Einfallwinkel $\beta$ zur Sedimentationsrichtung liegt und der Konvergenzwinkel $\gamma$ sich aus der Bedingung

$$L_1 \sin(\beta + \tfrac{\gamma}{2}) - L_2 \sin(\beta - \tfrac{\gamma}{2}) \leqq 2{,}83 \cdot H\sigma^{1/2}$$

worin $L_1$ der grösste Abstand von der Kegelspitze bis zum Schnittpunkt zwischen dem Strahlenbündel und der ferner Küvettenwand ist und $L_2$ der kleinste Abstand von der Kegelspitze bis zum Schnittpunkt zwischen dem Strahlenbündel und der naben Küvettenwand ist,ergibt.

**15.** Fotoelektrisches Verfahren nach Ansprüchen 1 bis 10, dadurch gekennzeichnet, dass man ein divergentes Strahlenbündel verwendet, dessen Achse auf der Sedimentationsrichtung senkrecht steht und der Divergenzwinkel $\theta$ sich aus der Bedingung

$$2(L + L_3)\; tg\frac{\theta}{2} \leqq 2{,}83\; H\sigma^{1/2}$$

worin $L_3$ der Abstand von der Strahlungsquelle bis zur nahen Küvettenwand in der Normalen ist, ergibt.

**16.** Fotoelektrisches Verfahren nach Ansprüchen 1 bis 10, dadurch gekennzeichnet, dass man ein divergentes Strahlenbündel verwendet, dessen Achse unter einem Einfallwinkel $\beta$ zur Sedimentationsrichtung liegt und der Divergenzwinkel $\theta$ sich aus der Bedingung

$$L_4 \sin(\beta + \tfrac{\theta}{2}) - L_5 \sin(\beta - \tfrac{\theta}{2}) \leqq 2{,}83\; H\sigma^{1/2}$$

ergibt, worin $L_4$ der grösste Abstand von der Strahlungsquelle bis zum Schnittpunkt zwischen dem Strahlenbündel und der ferner Küvettenwand ist,

$L_5$ der kleinste Abstand von der Strahlungsquelle bis zum Schnittpunkt zwischen dem Strahlenbündel und der nahen Küvettenwand ist,
ergibt.

**17.** Fotoelektrisches Verfahren nach einem beliebigen der vorangehenden Ansprüche, dadurch gekennzeichnet, dass man Strahlen verwendet, die sich im Wellenlängenbereich vom 0,6 µm bis 0,05 µm befinden.

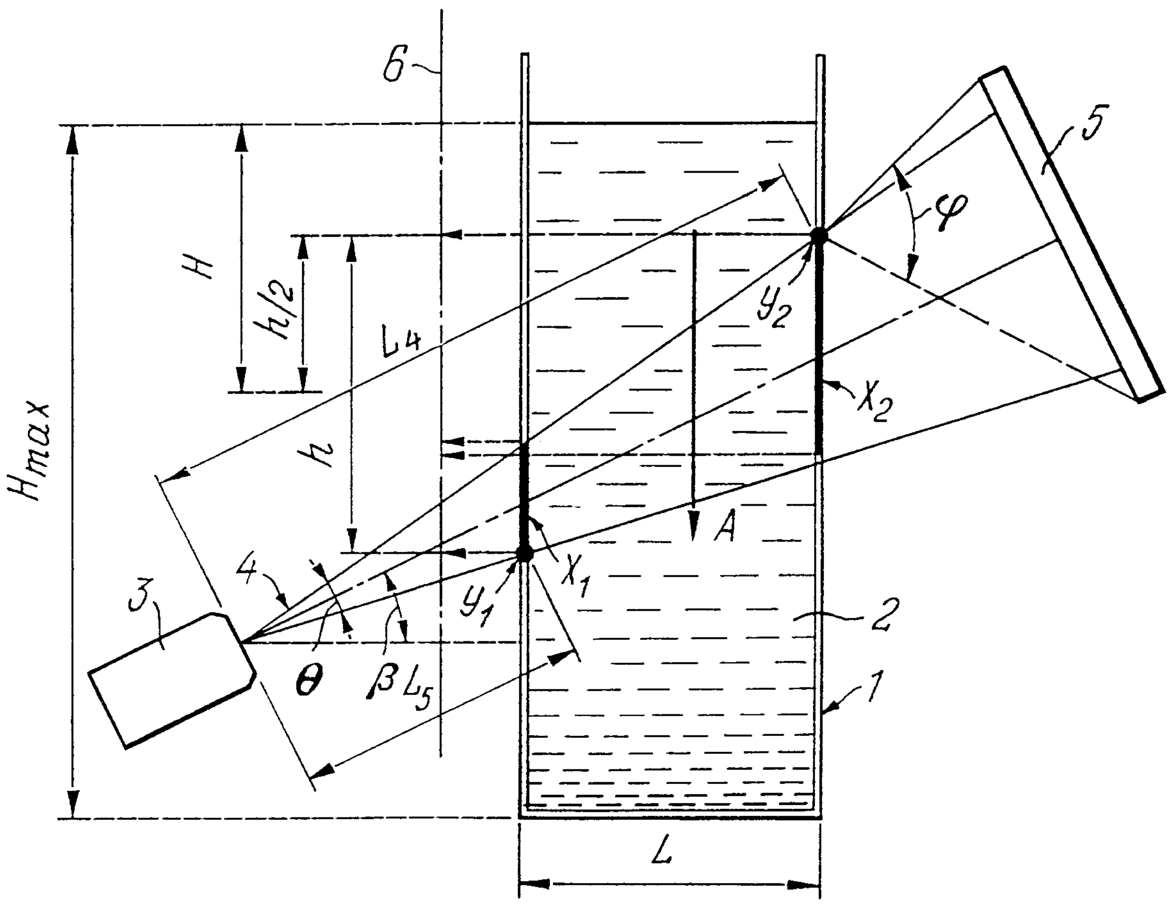


FIG.1

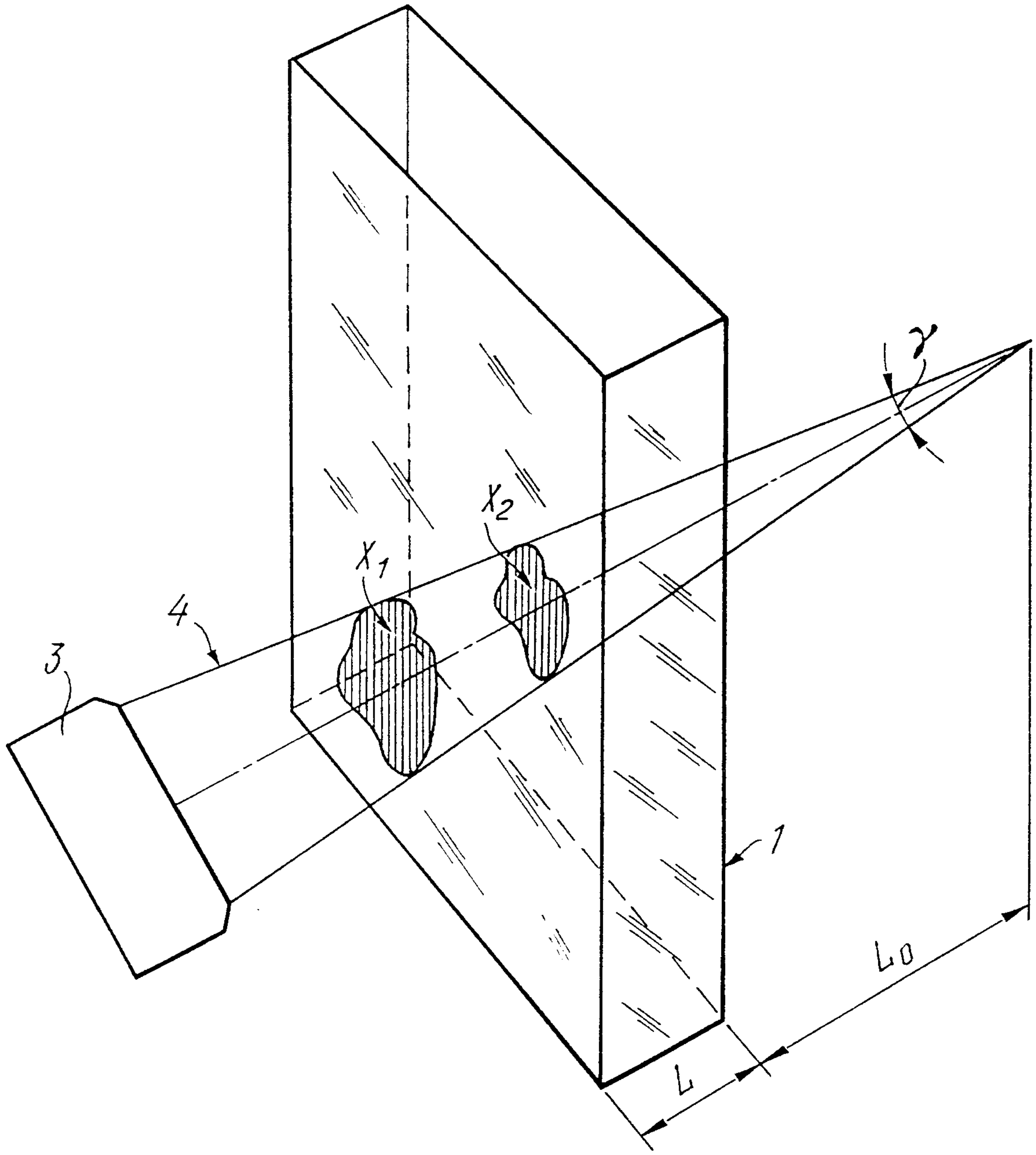


FIG. 2

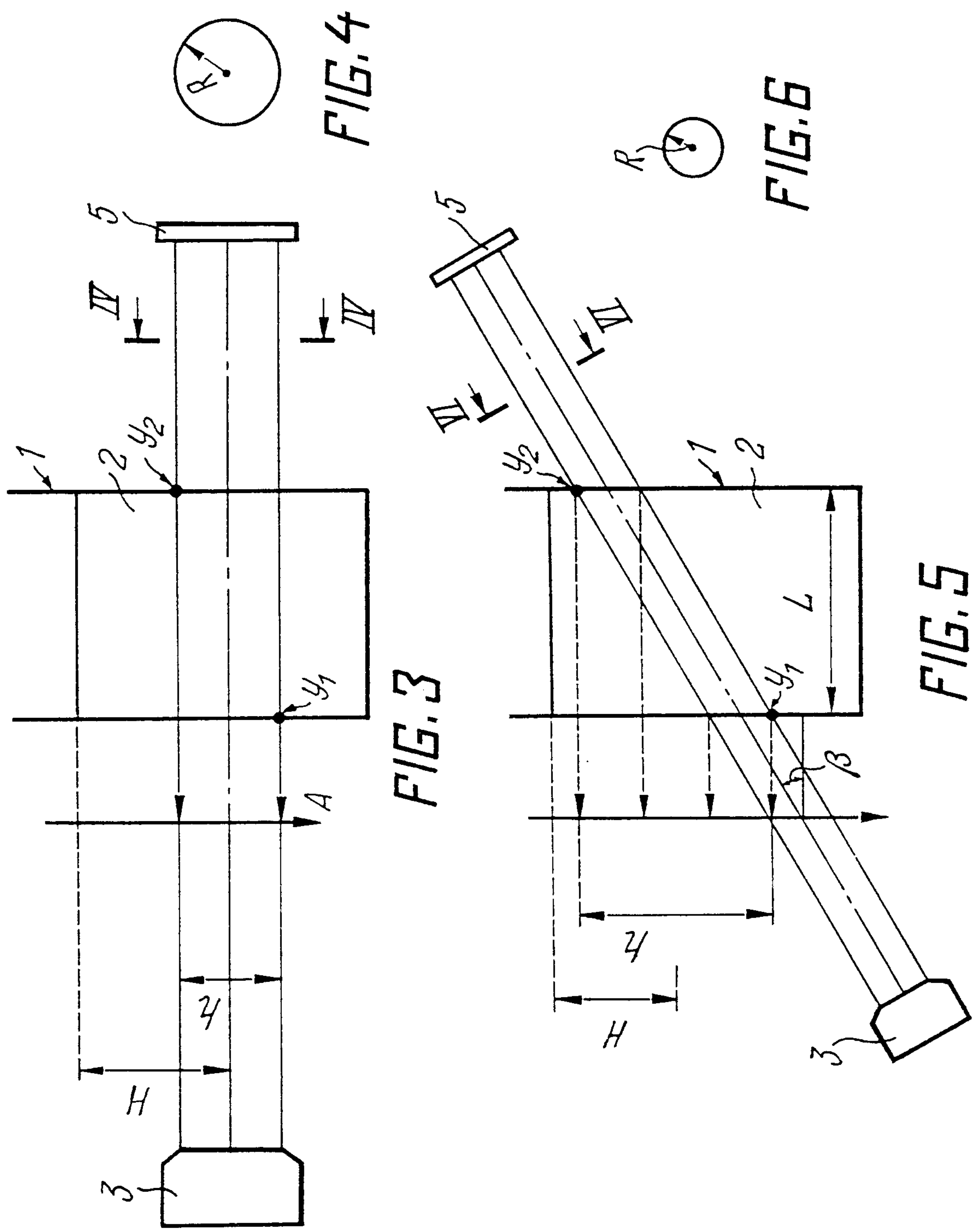


FIG.3

FIG.4

FIG.5

FIG.6

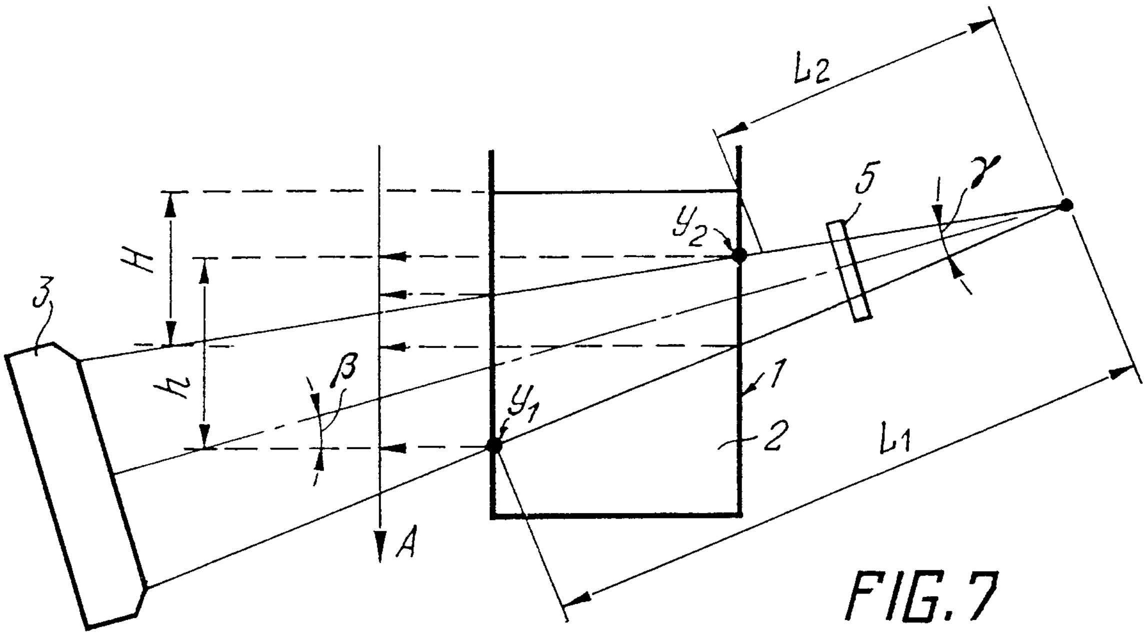


FIG.7

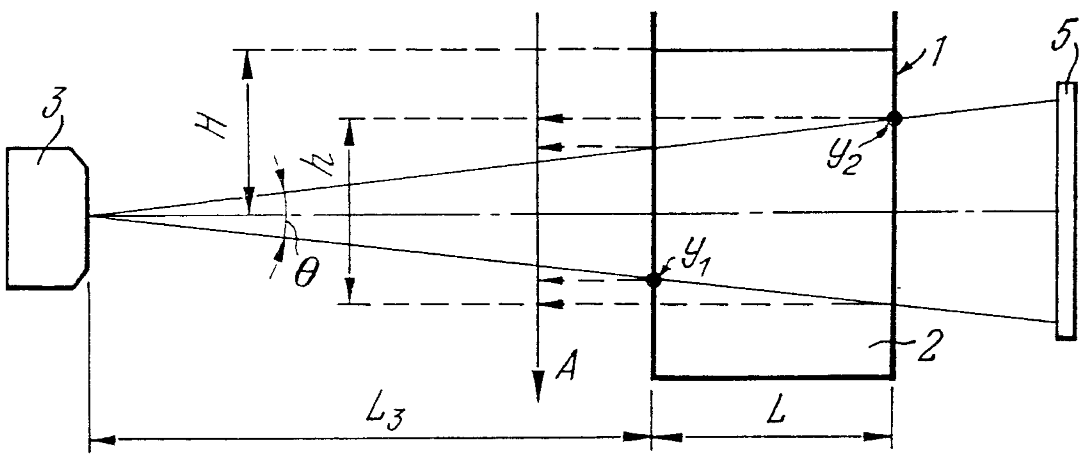


FIG.8

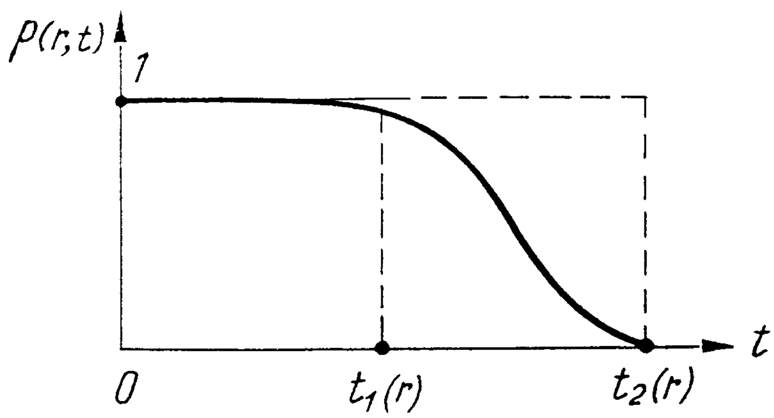


FIG.9

**INTERNATIONAL SEARCH REPORT**

International application No.
PCT/RU93/00186

A. CLASSIFICATION OF SUBJECT MATTER

$IPC^5$: G01N 15/04

According to International Patent Classification (IPC) or to both national classification and IPC

B. FIELDS SEARCHED

Minimum documentation searched (classification system followed by classification symbols)

$IPC^5$: G01N 15/00, 15/02, 15/04, 15/06, 15/10

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | US, A, 4696571 (THE UNITED STATES OF AMERICA AS REPRESENTED BY THE SECRETARY OF THE INTERRIOR), 29 September 1987 (29.09.87), abstract, column 2 | 1,11,12,7 |
| A | US, A, 4529309 (SVENSKA TRÄFORSKNINGSINSTITUTET), 16 July 1985 (16.07.85), abstract | 1,11,12,7 |
| A | US, A, 4953978 (COULTER ELEKTRONIKS OF NEW ENGLAND), 4 September 1990 (04.09.90), abstract | 1 |
| A | US, A, 4514257 (SVENSKA TRÄFORSKNINGSINSTITUTET), 30 April 1985 (30.04.85), abstract | 1,17,4 |
| A | SU, A1, 1635074 (Yu. V. Pospelov et.al.), 15 March 1991 | 1,4,7,11,13,15 |

☐ Further documents are listed in the continuation of Box C. ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 15 March 1994 (15.03.94) | 23 March 1994 (23.03.94) |
| Name and mailing address of the ISA/ RU<br><br>Facsimile No. | Authorized officer<br><br>Telephone No. |

Form PCT/ISA/210 (second sheet) (July 1992)

**INTERNATIONAL SEARCH REPORT**

International application No.
PCT/RU93/00186

C (Continuation). DOCUMENTS CONSIDERED TO BE RELEVANT

| Category* | Citation of document, with indication, where appropriate, of the relevant passages | Relevant to claim No. |
|---|---|---|
| | (15.03.91)<br>-- | |
| A | DE, A, 1598662 (KABUSHIKI KAISHA HITACHI SEISAKUSHO), 5 July 1973 (05.07.73), fig. 1,2<br>-- | 1,2,3,4,5,6 |
| A | GB, A, 1158338 (EUROPIAN ATOMIC ENERGY COMMUNITY (EURATOM), 16 July 1969 (16.07.69) | 1,2,3,4,5,6 |

----------------